# EUROPEAN PATENT APPLICATION

(11) **EP 4 769 248 A1**
(43) Date of publication of application: **01.07.2026**
(21) Application number: 24856136.7
(22) Date of filing: 28.06.2024
(51) Int. Cl.: G06N 20/00, G06F 18/10

(54) **MODEL CREATION METHOD, PROGRAM, AND INFORMATION PROCESSING DEVICE**

(30) Priority: 22.08.2023 JP 2023134755
(71) Applicant: Resonac Corporation, Tokyo 105-7325 (JP)
(72) Inventor: YATSUSHIRO, Megumi, Tokyo 105-7325 (JP); KURAUCHI, Yuji, Tokyo 105-7325 (JP); OKUNO, Yoshishige, Tokyo 105-7325 (JP); TAKEMOTO, Shimpei, Tokyo 105-7325 (JP)
(74) Representative: Strehl & Partner mbB
(86) International application number: PCT/JP2024/023466
(87) International publication number: WO 2025/041441

(57) **Abstract**

To improve prediction accuracy of a model. The present disclosure provides a model creation method executed by an information processing apparatus that creates a model to associate input data included in learning data with output data. The model creation method includes a first exclusion process of excluding the learning data in which the input data is an outlier, from a learning data set; a second exclusion process of excluding the learning data in which the input data and the output data are outliers, from the learning data set; a first model creation process of creating a first model using the learning data set from which the learning data is excluded in the first exclusion process; a second model creation process of creating a second model using the learning data set from which the learning data is excluded in the second exclusion process; and a model selection process of adopting the model having better prediction accuracy between the first model and the second model.

## Description

### TECHNICAL FIELD

The present invention relates to a model creation method, a program, and an information processing apparatus.

### BACKGROUND

Material informatics is known for improving the efficiency of material development by using information science such as statistical analysis, machine learning, and data mining. One aspect of the material informatics is composition search, which searches for the optimum combination of materials.

In the composition search, a process for separating or excluding outliers from learning data is performed in order to create an accurate model (see, for example, Patent Documents 1 to 3). Patent Document 1 discloses a technique for obtaining a data set composed of a predetermined format that includes a plurality of sets of test conditions and material information of a target substance that is generated based on the test conditions; performing a statistical process on the data set; and estimating, based on results of the statistical process, both a recommended test condition for optimizing the material information and the material information of the target substance that corresponds to the recommended test condition.

Patent Document 2 discloses a technique in which a data evaluation model constructed by performing machine learning on collected data evaluates the collected data that is input to the data evaluation model, and in which the data evaluation model automatically selects, based on evaluation results, training data for constructing a learning model from the evaluated data.

Patent Document 3 discloses a technique that selects data for updating an existing learning model used for machine learning, from data that is stored in a data storage, that generates a new learning model by performing machine learning based on the selected data, and that updates the existing learning model to a new learning model.

### RELATED-ART DOCUMENTS

### PATENT DOCUMENTS

Patent Document 1: Japanese Unexamined Patent Application Publication No. 2021-193623
Patent Document 2: Japanese Unexamined Patent Application Publication No. 2021-107970
Patent Document 3: Japanese Unexamined Patent Application Publication No. 2021-157654

### SUMMARY

### PROBLEM TO BE SOLVED BY THE INVENTION

However, in conventional techniques, there is a problem where inadequate exclusion of outliers hinders improvements in prediction accuracy of the model. For example, when there are many explanatory variables and the data set is sparse, it is difficult to appropriately determine outliers by conventional methods due to the large spread of data in a search space. Further, since such a data set is not normally distributed, it is difficult to determine outliers by standard deviation or the like.

The present disclosure provides a technique for improving prediction accuracy of a model.

### MEANS FOR SOLVING THE PROBLEM

In the present disclosure, a model creation method executed by an information processing apparatus that creates a model to associate input data included in learning data with output data is provided. The model creation method includes a first exclusion process of excluding the learning data in which the input data is an outlier, from a learning data set; a second exclusion process of excluding the learning data in which the input data and the output data are outliers, from the learning data set; a first model creation process of creating a first model using the learning data set from which the learning data is excluded in the first exclusion process; a second model creation process of creating a second model using the learning data set from which the learning data is excluded in the second exclusion process; and a model selection process of adopting the model that has better prediction accuracy between the first model and the second model.

In second disclosure relating to first disclosure, the first exclusion process includes excluding the outlier in the input data by one of a plurality of different methods.

In third disclosure relating to the second disclosure, the first exclusion process includes excluding the outlier in the input data by one of at least two different methods that include a first method and a second method.

In fourth disclosure relating to one of the first to third disclosures, the second exclusion process includes excluding the outlier in the input data by one of a plurality of different methods, and excluding the outlier in the output data by a predetermined method when the output data is univariate.

In fifth disclosure relating to the four disclosure, the second exclusion process includes:
excluding the outlier in the input data by one of at least two different methods that include a third method and a fourth method, and excluding the outlier in the output data by a fifth method when the output data is univariate, and
he second exclusion process includes:
excluding the outlier in the input data by the third method and excluding the outlier in the output data by the fifth method, or
excluding the outlier in the input data by the fourth method and excluding the outlier in the output data by the fifth method.

In sixth disclosure relating to any one of the first to third disclosures, the second exclusion process includes:
excluding the outlier in the input data by one of a plurality of different methods, and
excluding the outlier in the output data by one of a plurality of different methods when the output data is multivariate.

In seventh disclosure relating to the sixth disclosure,
the second exclusion process includes:
excluding the outlier in the input data by one of at least two different methods that include a third method and a fourth method, and excluding the outlier in the output data by one of at least two different methods that include a sixth method and a seven method when the output data is multivariate, and
the second exclusion process includes:
excluding the outlier in the input data by the third method and excluding the outlier in the output data by the sixth method,
excluding the outlier in the input data by the fourth method and excluding the outlier in the output data by the sixth method,
excluding the outlier in the input data by the third method and excluding the outlier in the output data by the seventh method, or
excluding the outlier in the input data by the fourth method and excluding the outlier in the output data by the seventh method.

In eighth disclosure relating to the third disclosure,
the first method is a method of detecting the outlier by a quantile based on a distance of each data from reference data, and
the second method is a method of detecting the outlier by a local outlier factor method.

In ninth disclosure relating to the fifth disclosure,
the third method is a method of detecting the outlier by a quantile based on a distance of each data from reference data,
the fourth method is a method of detecting the outlier by a local outlier factor method, and
the fifth method is a method of detecting the outlier by the quantile.

In tenth disclosure relating to the seventh disclosure,
each of the third method and the sixth method is a method of detecting the outlier by a quantile based on a distance of each data from reference data, and
each of the fourth method and the seventh method is a method of detecting the outlier by a local outlier factor method.

In eleventh disclosure relating to the eighth disclosure, the first exclusion process includes:
determining the quantile that is a hyperparameter of the first method, by grid search, or
determining the number of neighbors that is a hyperparameter of the second method, by the grid search.

In twelfth disclosure relating to the ninth disclosure, the second exclusion process includes:
determining, by the grid search, at least one of the quantile that is a hyperparameter of the third method, or the quantile that is a hyperparameter of the fifth method, or
determining, by the grid search, at least one of the number of neighbors that is a hyperparameter of the fourth method, or the quantile that is a hyperparameter of the fifth method.

In thirteenth disclosure relating to the tenth disclosure, the second exclusion process includes:
determining, by the grid search, at least one of the quantile that is a hyperparameter of the third method, or the quantile that is a hyperparameter of the sixth method,
determining, by the grid search, at least one of the quantile that is a hyperparameter of the third method, or the number of neighbors that is a hyperparameter of the seventh method,
determining, by the grid search, at least one of the number of neighbors that is a hyperparameter of the fourth method, or the quantile that is a hyperparameter of the sixth method, or
determining, by the grid search, at least one of the number of neighbors that is the hyperparameter of the fourth method, or the number of neighbors that is the hyperparameter of the seventh method.

Fourteenth disclosure provides a program that causes an information processing apparatus, which creates a model to associate input data included in learning data with output data, to perform:
a first exclusion process of excluding the learning data in which the input data is an outlier, from a learning data set;
a second exclusion process of excluding the learning data in which the input data and the output data are outliers, from the learning data set;
a first model creation process of creating a first model using the learning data set from which the learning data is excluded in the first exclusion process;
a second model creation process of creating a second model using the learning data set from which the learning data is excluded in the second exclusion process; and
a model selection process of adopting the model having better prediction accuracy between the first model and the second model.

Fifteenth disclosure provides an information processing apparatus that creates a model to associate input data included in learning data with output data, including:
an exclusion unit that excludes the learning data in which input data is an outlier, from a learning data set, and excludes the learning data in which the input data and output data are outliers, from the learning data set;
a model creation unit that creates:
   a first model using the learning data set from which the learning data, whose the input data is the outlier, is excluded, and
   a second model using the learning data set from which the learning data, whose the input data and the output data are the outliers, are excluded; and
   a model selection unit that adopts the method with better prediction accuracy between the first model and the second model.

### EFFECTS OF THE INVENTION

The present disclosure can improve prediction accuracy of a model.

### BRIEF DESCRIPTION OF THE DRAWINGS

[FIG. 1A] FIG. 1A is a diagram for describing the comparison between an outlier due to measurement error with an outlier measured for a prototype.
[FIG. 1B] FIG. 1B is a diagram for describing the comparison between the outlier due to measurement error with the outlier measured for the prototype.
[FIG. 2] FIG. 2 is a diagram for explaining a process flow in which an information processing apparatus creates a model by excluding outliers from a learning data set.
[FIG. 3A] FIG. 3A is a system diagram illustrating a configuration example of a data processing system.
[FIG. 3B] FIG. 3B is a diagram showing an example of the information processing apparatus for creating the model by excluding the outliers.
[FIG. 4] FIG. 4 is a diagram showing an example of a hardware configuration of a server device and the information processing apparatus.
[FIG. 5] FIG. 5 is a diagram showing an example of a functional configuration of the information processing apparatus.
[FIG. 6] FIG. 6 is a diagram illustrating a method for detecting outliers by quartiles.
[FIG. 7] FIG. 7 is a diagram illustrating a method for detecting outliers by the Leave One Out method.
[FIG. 8A] FIG. 8A is a diagram illustrating a method for detecting outliers of explanatory variables and target variables;
[FIG. 8B] FIG. 8B is a diagram illustrating a method for excluding the outliers detected in FIG. 8A.
[FIG. 9] FIG. 9 is a diagram for describing an example flowchart illustrating the overall flow of model creation.
[FIG. 10] FIG. 10 is an example flowchart illustrating the process of creating the model by excluding outliers in input data in step S2 of FIG. 9.
[FIG. 11] FIG. 11 is an example flowchart illustrating the process of creating the model by excluding outliers in the input data and output data in step S4 of FIG. 9.
[FIG. 12] FIG. 12 is an example flowchart illustrating the process of creating the model by excluding the input data that includes the outliers in step S2 of FIG. 9.
[FIG. 13] FIG. 13 is an example flowchart illustrating a grid search process for an optimal quantile in step S215 of FIG. 12.
[FIG. 14] FIG. 14 is an example flowchart illustrating a grid search process for an optimal number of neighbors in step S218 of FIG. 12.
[FIG. 15] FIG. 15 is an example flowchart illustrating the process of creating the model by excluding learning data that includes outliers in both the input data and the output data in step S4 of FIG. 9.
[FIG. 16] FIG. 16 is an example flowchart illustrating the grid search process for the optimal quantile in step S416 of FIG. 15.
[FIG. 17] FIG. 17 is an example flowchart illustrating the grid search process for the optimal number of neighbors in step S419 of FIG. 15.
[FIG. 18] FIG. 18 is an example flowchart illustrating the process of creating the model excluding learning data in which both the input data and the output data include outliers in step S421 of FIG. 15.
[FIG. 19] FIG. 19 is an example flowchart illustrating the grid search process for the optimal quantiles in the input data and the output data in step S4215A of FIG. 18.
[FIG. 20] FIG. 20 is an example flowchart illustrating the grid search process for the optimal quantile on a input data side and an optimal number of neighbors on an output data side in step S4215B of FIG. 18.
[FIG. 21] FIG. 21 is an example flowchart illustrating the grid search process for the optimal number of neighbors on the input data side and the optimal quantile on the output data side in step S4215C of FIG. 18.
[FIG. 22] FIG. 22 is an example flowchart illustrating the grid search process for optimal numbers of neighbors in the input data and the output data in step S4215D of FIG. 18.
[FIG. 23A] FIG. 23A is a diagram illustrating an example technique for excluding outliers in the input data in a first exclusion process.
[FIG. 23B] FIG. 23B is a diagram illustrating an example combination of methods for excluding outliers in the input data and the output data in a second exclusion process.

### MODE FOR CARRYING OUT THE INVENTION

Hereinafter, an information processing apparatus, and a model creation method performed by the information processing apparatus will be described as an example of an embodiment of the present invention.

### <Supplement to Comparison Technique>

In a composition search technique that searches for an optimum composition of materials, a model for searching for a composition of materials having suitable characteristics is created using a learning data set. In some cases, a developer of materials manufactures a prototype with a composition of materials that is significantly different from conventional compositions, and the specification of such a prototype is measured in order to confirm whether the prototype has preferable characteristics. However, in many cases, no improvement in characteristics is observed, and further search around the composition may not be conducted. In such cases, the composition of the prototype may become an outlier.

However, unlike the measurement error, data that is obtained by performing measurement for characteristics of the prototype cannot be judged whether to exclude the data at the time of data acquisition, and judgment is often made later after advancing a development process. As a result, the data may be overlooked or forgotten to be excluded.

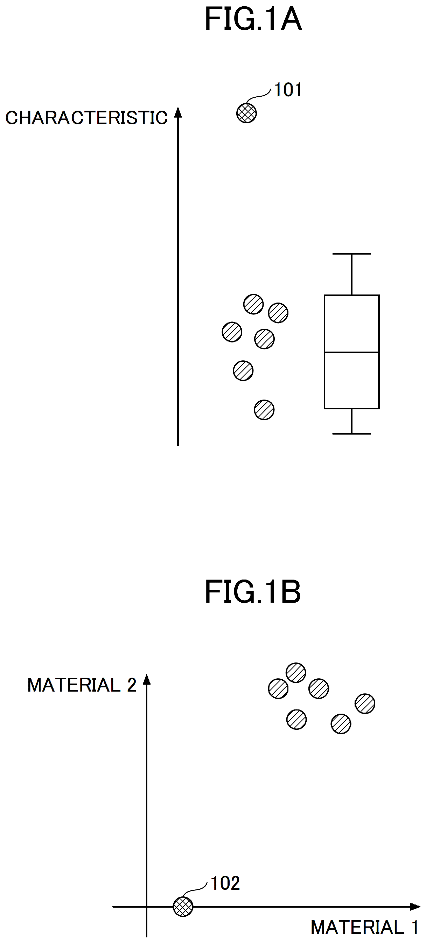

FIGS. 1A and 1B are diagrams illustrating the comparison between an outlier 101 due to measurement error and an outlier 102 measured for the prototype. The outlier 101 due to measurement error shown in FIG. 1A can be flagged as a "measurement error" by the developer at the time of measurement of characteristics or excluded from the accumulated data at the current spot.

On the other hand, the outlier 102 that is measured for the prototype shown in FIG. 1B corresponds to the coordinates of a data point with respect to the composition (a ratio of material 1 to material 2). In this case, there are cases where, for example, a composition significantly different from conventional compositions is tested but shows no improvement in characteristics. If no improvement in the characteristics is observed, further search around the composition is not performed. In addition, it is desirable to exclude measurement data of the prototype if the measurement data degrades the accuracy of the model or is disadvantageous to search for a composition with good characteristics. As described above, it is difficult to exclude the outlier 102 at the time of measurement because this outlier is not caused by measurement error and is not excluded from the accumulated data at the current spot. Therefore, the outlier 102 may be overlooked or forgotten to be excluded later in the development process.

In addition, when detecting outliers when the type and amount of materials to be blended are each used as an explanatory variable, many explanatory variables exist. However, experiments are rarely conducted uniformly by changing the type and amount of materials to be blended, and a learning data set tends to become sparse. As a result, it may be difficult to apply a general outlier detection technique such as outlier detection by standard deviation or quantile. In addition, there is a need for a method (an efficient method) that can detect outliers even when the number of data in the learning data set is large.

Therefore, when creating a model for composition search by machine learning or the like, the information processing apparatus of the present disclosure excludes outliers from the learning data set as follows.

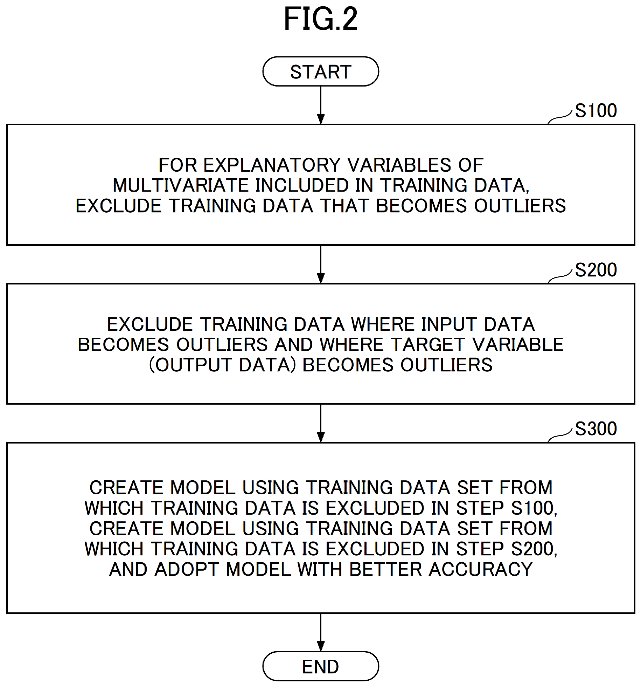

FIG. 2 is a diagram for explaining a process flow in which the information processing apparatus creates a model by excluding outliers from the learning data set.

In S100, the information processing apparatus measures distances from reference data for multivariate explanatory variables (input data), and excludes learning data including the input data that are outliers in the distribution of distances. As an outlier detection method, a quartile or the like may be used. Further, the information processing apparatus may detect outliers by other methods such as a local outlier factor method.

In S200, the information processing apparatus excludes learning data where input data becomes an outlier in the distribution of distances and a target variable (output data) becomes an outlier.

In S300, the information processing apparatus creates a model by using learning data set from which the learning data is excluded in step S100; creates a model by using the learning data set from which the learning data is excluded in step S200; and adopts the model with better accuracy.

Note that either the process in step S100 or the process in S200 may be performed first, or the process in step S100 and the process in S200 may be performed in parallel.
- As described above, in the information processing apparatus of the present embodiment, since the learning data set (explanatory variables) is sparse, it is easy to exclude outliers even when it is difficult to apply a general outlier detection technique. Therefore, it is easy to exclude data measured for prototypes or the like.
- Since it is possible to exclude learning data in which the target variable and the explanatory variable are outliers, it is possible to detect cases in which measurement is stopped because the characteristics deteriorated due to an experimental composition (the explanatory variable becomes an outlier due to the prototype, and the target variable becomes an outlier due to poor characteristics).
- Since the information processing apparatus creates a model by excluding outliers and validates the accuracy, it is possible to exclude outliers of explanatory variables when obtaining unfavorable prediction accuracy of the model.
- A model is created by excluding learning data in which only the explanatory variable is an outlier, and a model is created by excluding learning data in which both the explanatory variable and the target variable are outliers. The model with better accuracy is adopted. Thus, the model that is created by excluding outliers can be adopted from the viewpoint of accuracy.
- In addition, since the number of models created is not so large compared to a case where the Leave-One-Out method is applied comprehensively to a learning data set with a large number of data, it is possible to detect outliers even when the number of data units in a learning data set is large.

### <Terminology>

The learning data set is a collection of data required for machine learning and is a set of learning data including a combination of input data and output data. The learning data set is also called a training data set.

The outlier is a value that deviates significantly from other values among the obtained observed values. In this embodiment, the outlier may degrade the model accuracy or include data that is disadvantageous for the composition search for good characteristics.

The model is a mechanism (programs, files, and/or the like) for deriving output data from input data in machine learning. The input data and the output data are associated by the model. The model may be referred to as AI or artificial intelligence.

### <System Configuration Example>

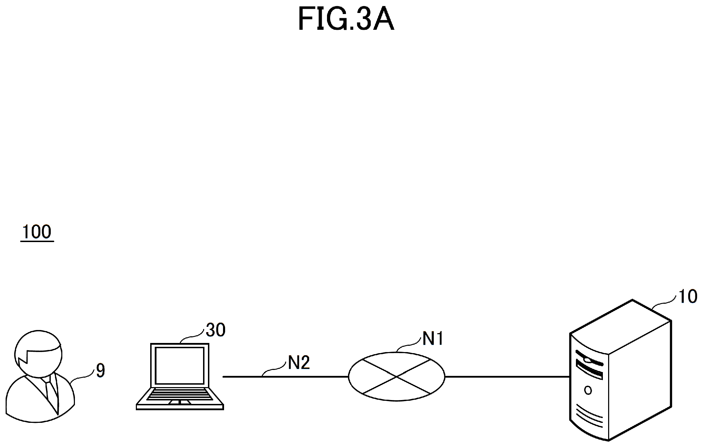

FIG. 3A is a diagram illustrating an example of a system configuration of a data processing system 100. The data processing system 100 of FIG. 3A is a client-server system and includes a server device 10 and an information processing apparatus 30. However, the information processing apparatus 30 may be a general-purpose computer and may not be included in the data processing system 100.

The server device 10 and the information processing apparatus 30 are communicatively connected via a wide area network N1 such as the Internet. The server device 10 may be installed in a cloud, a data center, or the like, or may be installed on premises. The server device 10 may be a Web server that returns processing results in response to a request from the information processing apparatus 30. A server is a computer or software that performs a function of providing information and processing results in response to a request from a client.

The server device 10 is implemented by one or more information processing apparatuses. The server device 10 creates a model for performing composition search from learning data that is specified by the information processing apparatus 30 by a developer 9. One of features is that the server device 10 creates a model after appropriately excluding outliers from learning data.

The server device 10 may have a data storage device in which the learning data is stored in advance. Alternatively, the server device 10 may acquire the learning data from a data server or NAS (Network Attached Storage). Alternatively, the developer 9 may operate the information processing apparatus 30 to transmit the learning data to the server device 10.

The server device 10 may support cloud computing. The cloud computing refers to a usage mode in which resources on a network are used without awareness of specific hardware resources. In this arrangement, the server device 10 need not be housed in one case or provided as a unit. Functions of the server device 10 may be distributed among a plurality of information processing apparatuses, or a plurality of information processing apparatuses may have all functions and information processing apparatuses for processing may be switched based on load distribution or the like.

The information processing apparatus 30 is disposed in a facility such as an enterprise, a research institute, a development department, or a factory, and the information processing apparatus 30 is connected to a network N2. The network N2 may be a LAN, Wi-Fi (registered trademark), a wide area Ethernet (registered trademark), or a cellular phone network or the like such as 4G, 5G, or 6G.

The information processing apparatus 30 is a machine learning or general-purpose computer used by the developer 9. Here, the developer 9 is a person who uses the server device 10 to create a model from learning data. A person who uses the information processing apparatus 30 may include a person who undertakes to create a model in addition to a person who creates the model. The person who uses the information processing apparatus 30 may be a person who performs composition search.

In the information processing apparatus 30, a Web browser or a native application dedicated to the server device 10 operates. When the information processing apparatus 30 executes the Web browser, the information processing apparatus 30 and the server device 10 execute a Web application. The Web application is an application that operates by the cooperation of a program based on a programming language (for example, JavaScript (registered trademark)) that operates on the Web browser and a program on a Web server (server device 10) side. When the Web application is executed, a model may be created by the server device 10 or by the information processing apparatus 30 that has received the Web application.

An application that is not executed unless the application is installed in the information processing apparatus 30 is called a native application. Also in this embodiment, the application that is executed by the information processing apparatus 30 may be the Web application or the native application. In this case as well, a process of creating the model by excluding outliers from the learning data may be performed by the server device 10 or by the information processing apparatus 30 that uses the native application.

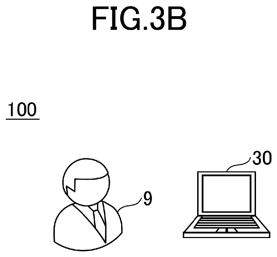

Further, in this embodiment, the information processing apparatus 30 may create a model by excluding outliers by itself as shown in FIG. 3B, instead of the client-server method as shown in FIG. 3A. In this case, the native application that creates the model by excluding the model from the learning data operates in the information processing apparatus 30. However, even in this case, the information processing apparatus 30 may acquire learning data from a data server on the network. In this arrangement, even in the configuration of FIG. 3B, it is preferable that the information processing apparatus 30 can be connected to the network.

The information processing apparatus 30 is, for example, a desktop PC, a notebook PC, a smartphone, a PDA (Personal Digital Assistant), a tablet terminal, or the like used by the developer 9. In addition, the information processing apparatus 30 may be any apparatus in which the Web browser or the native application operates.

The developer 9 may appropriately use the configurtions of FIG. 3A and FIG. 3B.
- The information processing apparatus 30 excludes outliers, and the server device 10 creates a model.
- The server device 10 excludes outliers, and the information processing apparatus 30 creates a model. In this embodiment, unless otherwise mentioned, the configuration of FIG. 3B (the information processing apparatus 30 performs processing by itself) will be described.

### <Hardware Configuration Example>

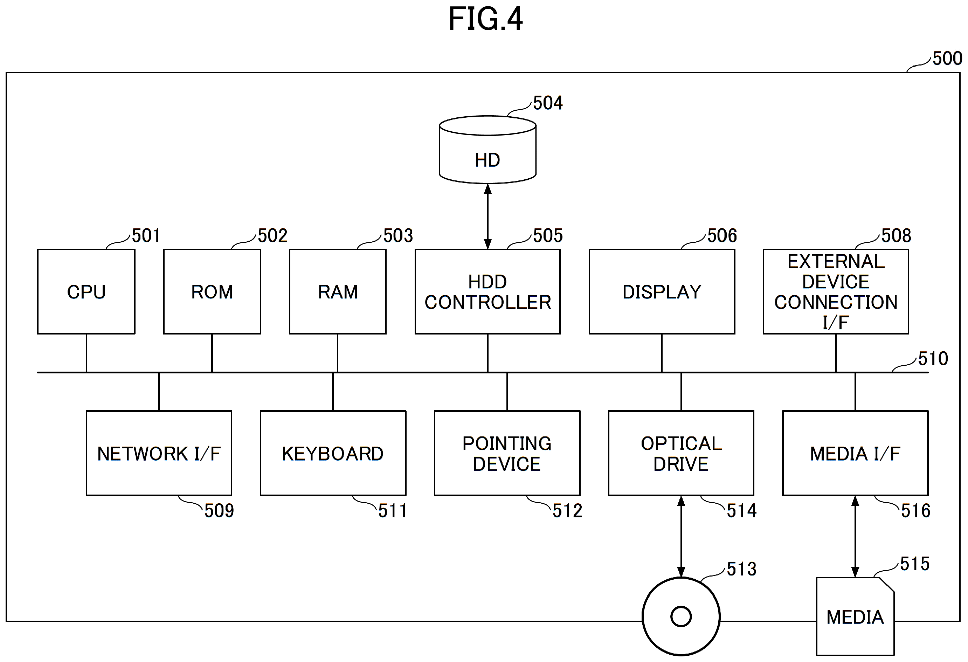

With reference to FIG. 4, a hardware configuration of the server device 10 and the information processing apparatus 30 included in the data processing system 100 according to the present embodiment will be described.

### <Information Processing System and Information Processing Apparatus 30>

FIG. 4 is a diagram showing a hardware configuration example of the server device 10 and the information processing apparatus 30 according to the present embodiment. As shown in FIG. 4, each of the server device 10 and the information processing apparatus 30 is constructed by a computer 500, and is provided with a CPU 501, a ROM 502, a RAM 503, an HD (Hard Disk) 504, an HDD (Hard Disk Drive) controller 505, a display 506, an external device connection I/F (Interface) 508, a network I/F 509, a bus line 510, a keyboard 511, a pointing device 512, an optical drive 514, and a media I/F 516.

Among these components, the CPU 501 controls the operation of the server device 10 and the information processing apparatus 30 as a whole. The ROM 502 stores a program used for driving the CPU 501 such as an IPL. The RAM 503 is used as a work area of the CPU 501. The HD 504 stores various data such as programs. The HDD controller 505 controls reading or writing of various data to the HD 504 under the control of the CPU 501. The display 506 displays various information such as a cursor, a menu, a window, a character, or an image. The external device connection I/F 508 is an interface for connecting various external devices. An external device in this case is, for example, a USB (Universal Serial Bus) memory, a printer, or the like. The network I/F 509 is an interface for performing data communication using the network N2. The bus line 510 is an address bus or a data bus for electrically connecting components that includes the CPU 501 and the like shown in FIG. 4.

The keyboard 511 is a kind of an input device with a plurality of keys used for inputting characters, numerical values, various instructions, and/or the like. The pointing device 512 is a kind of an input device for selecting or executing various instructions; selecting an object to be processed; moving a cursor; or the like. The optical drive 514 controls reading or writing of various data from or to an optical storage medium 513 as an example of a removable storage medium. The optical storage medium 513 may be a CD, DVD, Blu-Ray (registered trademark), or the like. The media I/F 516 controls reading or writing (storing) of data from or to a storage media 515 such as a flash memory.

### <Functions>

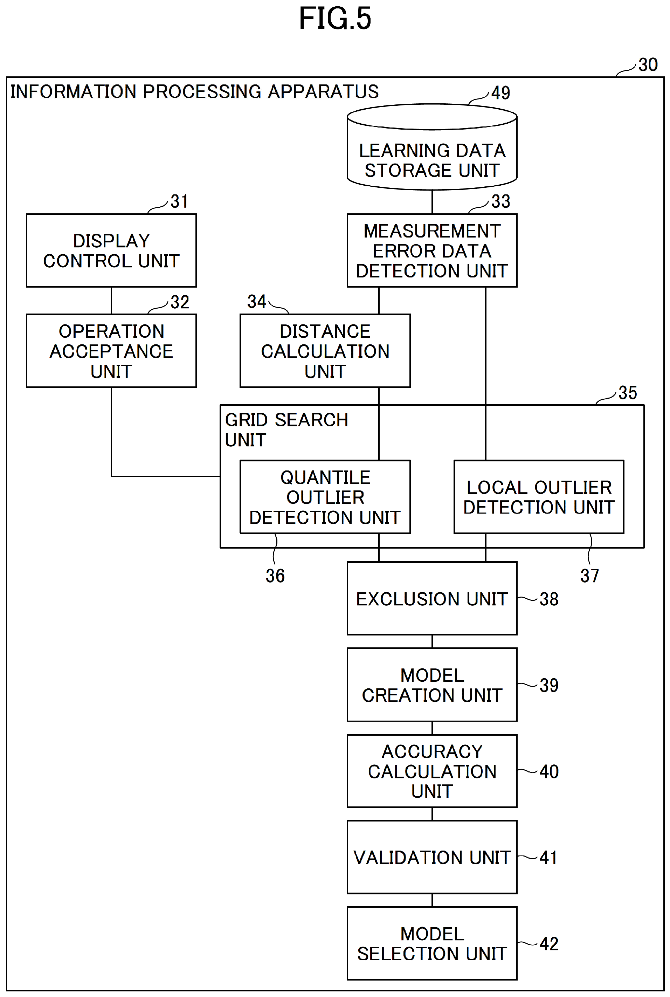

Next, a functional configuration of the information processing apparatus 30 according to the present embodiment will be described by dividing the functional configuration into blocks with reference to FIG. 5. FIG. 5 is a diagram showing an example of the functional configuration of the information processing apparatus 30 according to the present embodiment. Note that the lines among functional blocks in FIG. 5 show mutual relationships, but this does not mean that the process is limited to the order that is indicated by these lines.

The information processing apparatus 30 includes a display control unit 31, an operation acceptance unit 32, a measurement error data detection unit 33, a distance calculation unit 34, a grid search unit 35, a quantile outlier detection unit 36, a local outlier detection unit 37, an exclusion unit 38, a model creation unit 39, an accuracy calculation unit 40, a validation unit 41, and a model selection unit 42. Each of these components is a function or a device for functioning when any of the components shown in FIG. 4 operates by an instruction from the CPU 501 according to a program that is developed in the RAM 503.

The information processing apparatus 30 has a learning data storage unit 49. The learning data storage unit 49 is constructed in the HD 504 and the RAM 503 shown in FIG. 4. The learning data storage unit 49 stores a learning data set. It is assumed that the learning data set is divided into input data and output data. In the case of multiple regression models, input data is referred to as explanatory variables and output data is referred to as target variables. Although the terms explanatory variables and target variable are sometimes used in this embodiment, a machine learning method is not limited to the multiple regression models. The learning data storage unit 49 may be on a network accessible to the information processing apparatus 30.

The display control unit 31 interprets screen information held by the native application and displays the screen information on the display 506. The operation acceptance unit 32 accepts various operations of the developer 9 on various screens displayed on the display 506.

The measurement error data detection unit 33 acquires a learning data set stored in the learning data storage unit 49 and detects measurement error data included in the learning data set. It is assumed that a predetermined flag is assigned to the measurement error data.

The distance calculation unit 34 calculates a distance of the learning data (which may be used as either input data or output data) to reference data set as reference data in order to exclude outlier(s) by, for example, quartiles.

The grid search unit 35 prepares all combinations of designated hyperparameters. In this embodiment, the hyperparameter is a quantile Q or the number of neighbors N. Note that grid search is not essential.

The quantile outlier detection unit 36 detects an outlier (which may be either input data or output data) from the learning data based on, for example, quartiles. When the grid search is performed, the quantile outlier detection unit 36 detects an outlier from the learning data based on the quantile Q that is determined by the grid search unit 35.

The local outlier detection unit 37 detects an outlier (which may be either input data or output data) from a learning data set by, for example, setting the number of neighbors N to 3. When the grid search is performed, the local outlier detection unit 37 detects an outlier from the learning data set based on the number of neighbors N that is determined by the grid search unit 35. A local outlier is an outlier detected based on data density in space. Local density is an inverse of an average distance between a point of interest and k neighboring points. If there is an outlier A, the local density of the outlier A itself is low because the distance between the outlier A and k neighboring points is large. Since the k points that are not outliers are close to their respective neighboring points, the local density is high. Therefore, in a case of the point A that is an outlier, the local density of the point A is low, but the local density of the k neighboring points are high. In a case of a point that is not an outlier, the local density of the point and the local density of its neighboring points have similar values. In this arrangement, it is judged to be an outlier when a ratio of local density of a target to local density of neighboring points of the target differs by a threshold value or more.

The exclusion unit 38 excludes learning data including input data that is an outlier detected by the quantile outlier detection unit 36 or the local outlier detection unit 37, from learning data set. The exclusion unit 38 also excludes learning data including input data and output data that are outliers detected by the quantile outlier detection unit 36 or the local outlier detection unit 37, from the learning data set. Note that exclusion does not need to be performed until elimination of the learning data itself, and may not be used for creation of a model.

The model creation unit 39 creates a model for composition search using the learning data set from which outlier(s) are excluded. The model may be created by various methods of machine learning. The machine learning is a technique for making a computer acquire a learning ability like a human being; refers to a technique in which the computer autonomously generates an algorithm necessary for judgment of data identification or the like from the learning data that is taken in beforehand; and makes a prediction by applying the algorithm to new data. The learning method for machine learning may be any one of supervised learning, unsupervised learning, and reinforcement learning (supervised learning is mainly used in this embodiment), and further, a learning method that combines the above learning methods may be used. Any learning method for the machine learning may be used. Machine learning methods include perceptron, deep learning, support vector machine, logistic regression, naive Bayes, decision tree, random forest, and the like, and are not limited to the methods described in this embodiment.

For example, deep learning is an algorithm in which, after predicting output data based on input data, weights of a neural network are adjusted by an error back-propagation method in order to reduce error from training data. In a case of composition search, a developer prepares a learning data set including a plurality of learning data by using learning data as a set in which a combination amount of each material is input data; and material characteristics (strength characteristics, physical characteristics, electrical characteristics, corrosion resistance, and/or the like) are output data. Then, the model creation unit 39 learns the mapping between the input data and the output data.

The accuracy calculation unit 40 calculates the accuracy of the model that is created by the model creation unit 39. The learning data set is previously divided into L pieces, and a model is created by using training data excluding one of these pieces (this is called test data). The accuracy calculation unit 40 inputs the excluded test data to the created model, and compares an output of the model with the output data in the test data to calculate the accuracy of the created model.

When outliers are excluded by different quantiles or numbers of neighbors by the grid search unit 35, a model is created for each of learning data sets from which different outliers are excluded. The accuracy calculation unit 40 calculates accuracy for each model. The accuracy calculation unit 40 also calculates accuracy for each model when cross-validation is performed.

The validation unit 41 creates L models from the learning data set by a method such as cross-validation, and averages the accuracy of the output of each model. By averaging, differences in model accuracy due to variations in learning data are reduced.

The model selection unit 42 adopts the model having better accuracy among the model that is created by excluding the learning data in which only the input data is the outlier; and the model that is created by excluding the learning data in which both the input data and the output data are outliers.

### <Detection of Outliers by Quartiles>

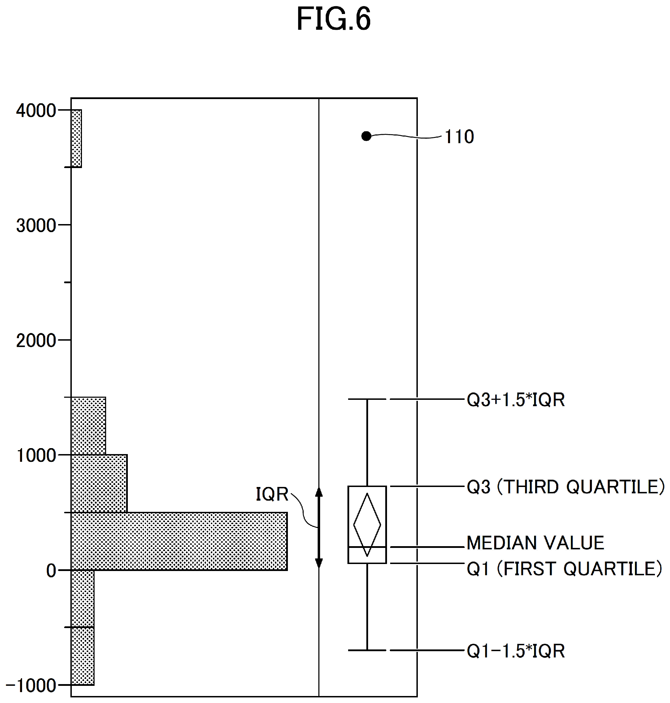

With reference to FIG. 6, detection of outliers by quartiles, which is a comparative technique for the present embodiment and is partially used, will be supplemented. FIG. 6 is a diagram for explaining a method for detecting an outlier 110 by quartiles. The quartiles are obtained in a detection method for calculating quartiles (Q1, Q2, Q3) that divide data into four equal parts when the data is arranged in decreasing order, and for identifying data as the outlier 110 if the data is smaller than Q1 minus 1.5 times IQR (Q3 - Q1), or larger than Q3 plus 1.5 times IQR(Q3 - Q1).

Such a method can be said to be a method for detecting the outlier 110 based on the distribution of data. However, even if learning data is excluded by this method, it is not always possible to exclude the outlier that decreases prediction accuracy of the model.

### <Detection of Outlier by Leave-One-Out Method>

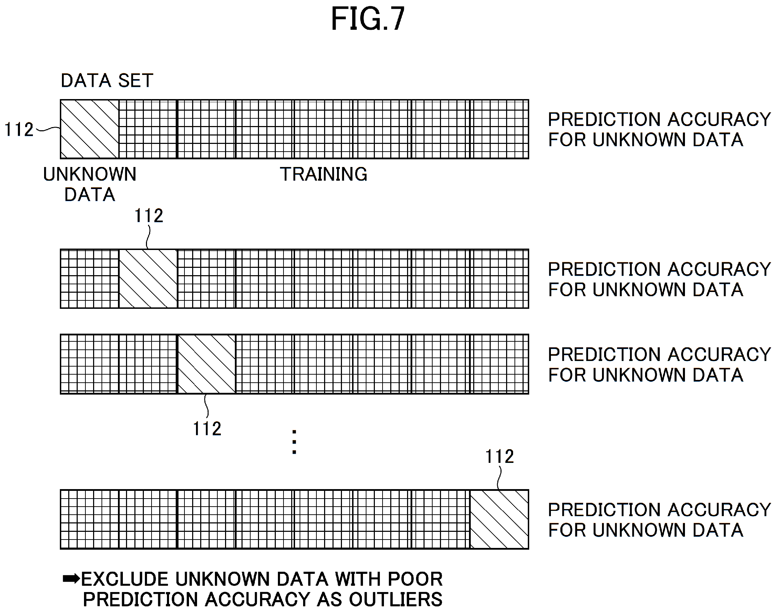

With reference to FIG. 7, detection of the outlier by the Leave-One-Out method, which is a comparative technique to the present embodiment, will be supplemented. FIG. 7 is a diagram for explaining an outlier detection method by the Leave-One-Out method. The Leave-One-Out method is a method in which one learning data is excluded as unknown data 112, and a model is constructed with the remaining learning data. In FIG. 7, there are eight learning data sets. In this arrangement, eight models are created, and the accuracy of each model is compared using the unknown data 112 as input. The unknown data 112 with poor accuracy is excluded as an outlier. The difference from cross-validation is that the Leave-One-Out method has a much larger number of data splits.

Such a method can be said to be a method using prediction accuracy of a machine learning model. However, when the Leave-One-Out method is applied comprehensively to a learning data set with a large number of data, a large number of models to be created is obtained, and the disadvantage of computational cost is likely to occur. In addition, outliers of combinations (explanatory variables) are not always excluded.

### <Outline of Outlier Exclusion Method of Embodiment>

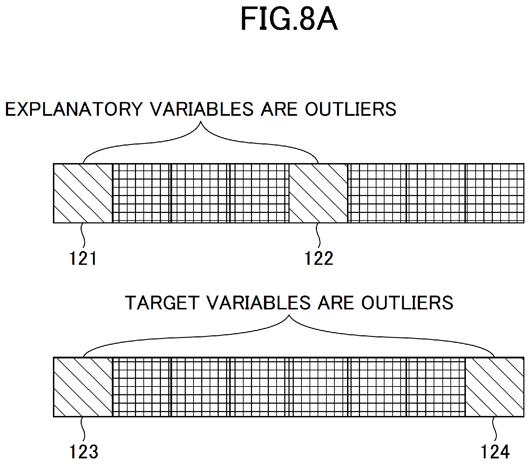

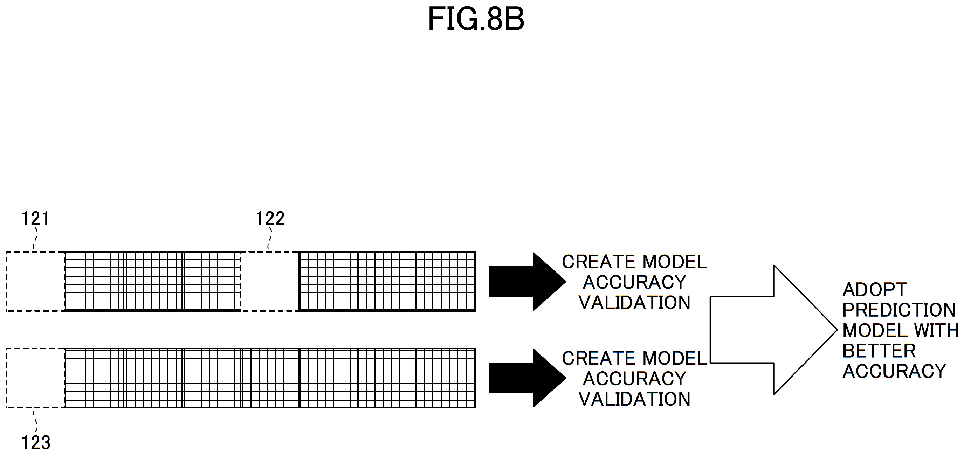

The outline of the outlier exclusion method of this embodiment will be described with reference to FIGS. 8A and 8B. FIGS. 8A and 8B are diagrams for explaining outliers of explanatory variables, outliers of target variables, and the outlier exclusion method. First, FIG. 8A is a diagram for explaining a method for detecting the outliers of the explanatory variables and target variables. The quantile outlier detection unit 36 and the local outlier detection unit 37 detect outliers of explanatory variables from the distribution of the input data as explanatory variables. In FIG. 8A, two outliers 121 and 122 are detected from the explanatory variables (combination).

As described above, in some cases, it is difficult to detect a "prototype (challenging compositions and comparison compositions)" as an outlier in a combination system (explanatory variable). This is because there are many explanatory variables and the learning data set is sparse, so that data spread in a search space is large and is not normally distributed. In such a case, the following process is effective.
1. A reference combination is set, and a distance from the reference combination (definition of distance is optional) is calculated.
2. The larger outlier in a distance distribution is defined as the outlier in the explanatory variable.

Quantiles for determining outliers and/or the number of neighbors N in local outliers can be automatically determined as hyperparameters by grid search.

Next, the quantile outlier detection unit 36 and the local outlier detection unit 37 detect outliers in the target variable from the distribution of the output data as the target variable. This is to pick up cases or the like in which subsequent search is stopped because the characteristics deteriorate. In this embodiment, since only the target variable is not excluded even if the target variable is an outlier, when an explanatory variable is also an outlier, cases or the like in which the subsequent search is stopped because the explanatory variable is an outlier and the characteristics deteriorate can be picked up.

Two outliers 123 and 124 are detected from the target variables. Exclusion of the outliers based on the target variables is expected to improve the model accuracy.

FIG. 8B is a diagram for explaining a method for excluding the outliers detected in FIG. 8A. The exclusion unit 38 excludes the learning data including the outliers 121 and 122 in the explanatory variables, and the model creation unit 39 creates a model. Similarly, the exclusion unit 38 excludes learning data including outliers 121 and 123 that are respective outliers in both the explanatory variable and the target variable, and the model creation unit 39 creates a model. The accuracy calculation unit 40 calculates the accuracy of these models, and the model selection unit 42 adopts the model with better accuracy.

If all outliers shown in FIG. 8B are excluded, there is a possibility that a search area of the model is narrowed (accuracy is increased but prediction in an extrapolation region is weak). Therefore, it is preferable to exclude only outliers whose characteristics (target variable) are far from a target value on an inferior side of the characteristics.

### <Operating Procedure>

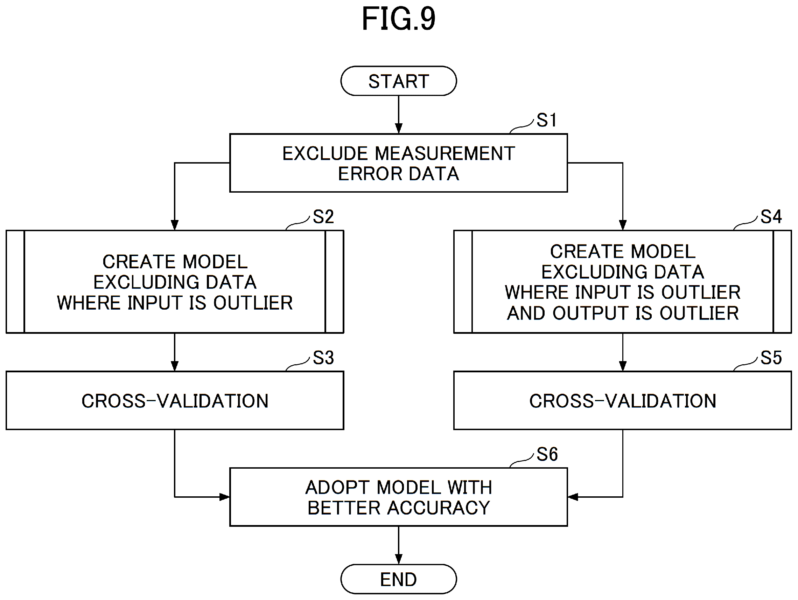

Referring to FIGS. 9 to 11, the process flow for creating the model for composition search by excluding outliers will be described.

### <Processing Without Grid Search>

First, FIG. 9 is a flowchart for explaining the entire flow of model creation. Hereinafter, the explanatory variable is referred to as "input data" and the target variable is referred to as "output data".

First, the measurement error data detection unit 33 excludes learning data due to measurement error to which flags or the like are assigned from learning data set (S1).

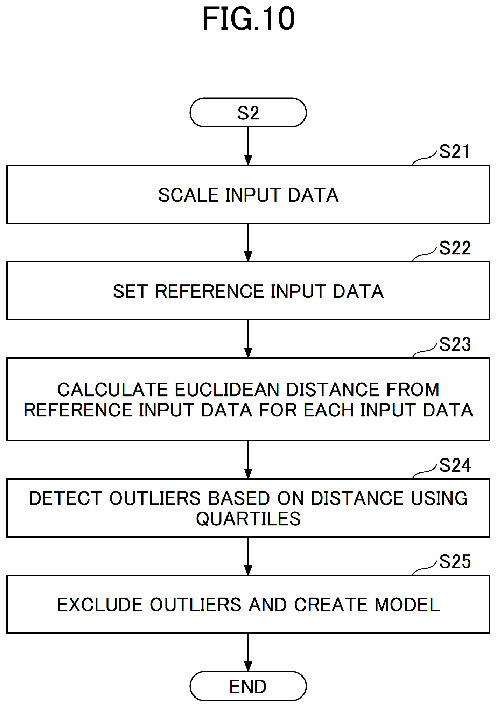

The information processing apparatus 30 performs a first exclusion process of excluding outlier(s) in the input data. The information processing apparatus 30 also performs a first model creation process of creating a model (an example of a first model) from the learning data set from which the learning data including the input data being outlier(s) is excluded (S2). The details will be described with reference to FIG. 10.

Next, the validation unit 41 performs the process in step S2 a plurality of times to perform cross-validation (S3). That is, the validation unit 41 creates a plurality of models (an example of a plurality of first models) from a learning data set after the learning data including the input data being outlier(s) is excluded by changing test data that is not used for model creation. The validation unit 41 calculates the accuracy of each model calculated by the accuracy calculation unit 40.

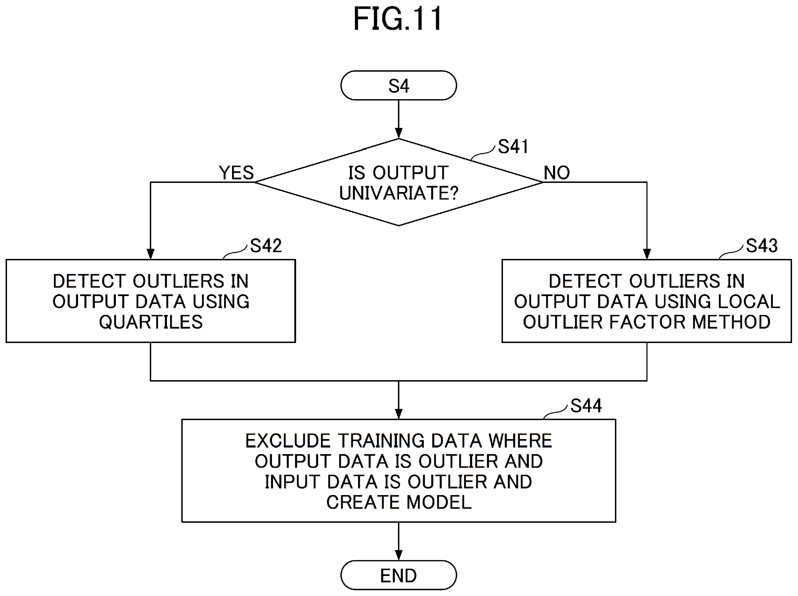

Next, the information processing apparatus 30 performs a second exclusion process of excluding the learning data where the input data are outlier(s) and the output data are outlier(s). The information processing apparatus 30 performs a second model creation process of creating a model (an example of a second model) from the learning data set from which the learning data where the input data are the outlier(s) and the output data are outlier(s) are excluded (S4). Details will be described with reference to FIG. 11.

The validation unit 41 performs the process in step S4 a plurality of times to perform cross-validation (S5). That is, the validation unit 41 creates a plurality of models (an example of a plurality of second models) from the learning data set after excluding the learning data where the input data are outlier(s) and the output data are outlier(s) by changing test data that is not used for model creation, and calculates the accuracy of each model.

The model selection unit 42 performs a model selection process of selecting a model with better prediction accuracy among the models of step S2 and the models of step S4 (S6). The prediction accuracy refers to model accuracy with respect to data other than training data. As an index of the accuracy of a regression model, MAE (Mean Absolute Error), MAPE (Mean Absolute Percentage Error), WAPE (weighted absolute percentage error), MSE (Mean Square Error), RMSE (square root of mean square error), and the like are known.

FIG. 10 is a flowchart illustrating the process of creating the model by excluding outliers in the input data in step S2 of FIG. 9.

First, the input data is converted to a value in a predetermined range such as 0 to 1 by normalization, or to a value having an average of "0" and a variance of "1" by standardization (S21).

Next, the distance calculation unit 34 acquires the input data as a reference (S22). The input data as the reference can be preset by the developer. Alternatively, the input data whose output data (target value) indicates a median value may be automatically selected. Since the output data indicates the median value, the input data can also be expected to be distributed near the center of a plurality of other input data.

Next, the distance calculation unit 34 calculates a distance from the input data as the reference for each input data (S23). The distance may be any distance that can detect an outlier, such as Euclidean distance or Mahalanobis distance.

The quantile outlier detection unit 36 detects an outlier by, for example, quartiles based on the distance in step S23 (an example of a first method), and the exclusion unit 38 excludes the learning data including the input data with outlier(s), from the learning data set (step S24). An quintile or the like may be used instead of the quartile.

Instead of the process in steps S23 and S24 described above, the local outlier detection unit 37 may detect the outlier by the local outlier factor method (an example of a second method).

Thereafter, the model creation unit 39 creates a model by using the learning data set, from which the outlier(s) are excluded by focusing on the input data (step S25).

FIG. 11 is a flowchart illustrating the process of creating the model by excluding the outliers in the input data and the output data in step S4 of FIG. 9.

First, it is determined whether the output data is univariate (S41). A univariate case means that the output data has one element, and a multivariate case means that the output data has a plurality of elements.

In the univariate case (Yes in S41), the quantile outlier detection unit 36 detects, for example, an outlier in the output data by quartiles (an example of a fifth method) (S42). Instead of the quartiles, a quintile or the like may be used.

In the multivariate case (No in S41), the local outlier detection unit 37 detects, for example, an outlier in the output data by the local outlier factor method (an example of a seventh method) with the number of neighbors that is set to 3 (S43). Instead of three neighbors, four or the like may be used as the number of neighbors. In the case of the multivariate case (No in S41), the quantile outlier detection unit 36 calculates a distance from the reference data for each data, and detects, for example, an outlier by quartiles based on this distance (an example of a sixth method).

The exclusion unit 38 excludes the learning data where the output data is the outlier and the input data is the outlier, from the learning data set (S44). Then, the model creation unit 39 creates a model by using the learning data set from which the outliers are excluded by focusing on the input data and the output data.

### <Process Using Grid Search for Input Data>

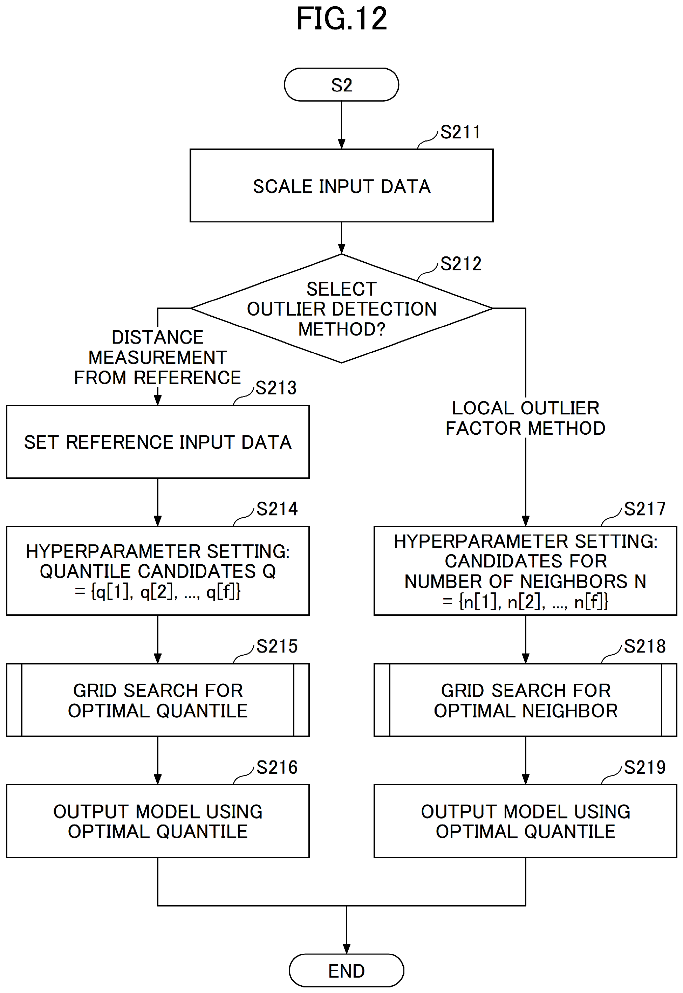

Next, with reference to FIGS. 12 to 14, a process of determining optimal quantiles for the input data by using the grid search, and of excluding the outliers will be described. The overall flow of model creation is similar to that shown in FIG. 9.

FIG. 12 is a flowchart illustrating a process for creating a model by excluding the input data that is the outlier in step S2 of FIG. 9.

First, the input data is converted to a value in a predetermined range such as 0 to 1 by normalization, or to a value having an average of "0" and a variance of "1" by standardization (S211).

Next, the grid search unit 35 selects one of outlier detection methods (distance measurement from the reference, the local outlier factor method) (S212). The selection method may be set in advance by the developer, or the method having better model accuracy may be selected after performing both methods.

If the distance measurement from the reference (an example of the first method) is selected, the distance calculation unit 34 acquires input data as a reference (S213). The input data as the reference may be set in advance by the developer. Alternatively, the input data whose output data (target value) indicates a median value may be automatically selected.

Next, the grid search unit 35 determines quantile candidates q[1], q[2], q[3] ... q[f] (S214). The quantile candidates q[1], q[2], q[3] ... q[f] are natural numbers such as 2, 3, 4, and 5.

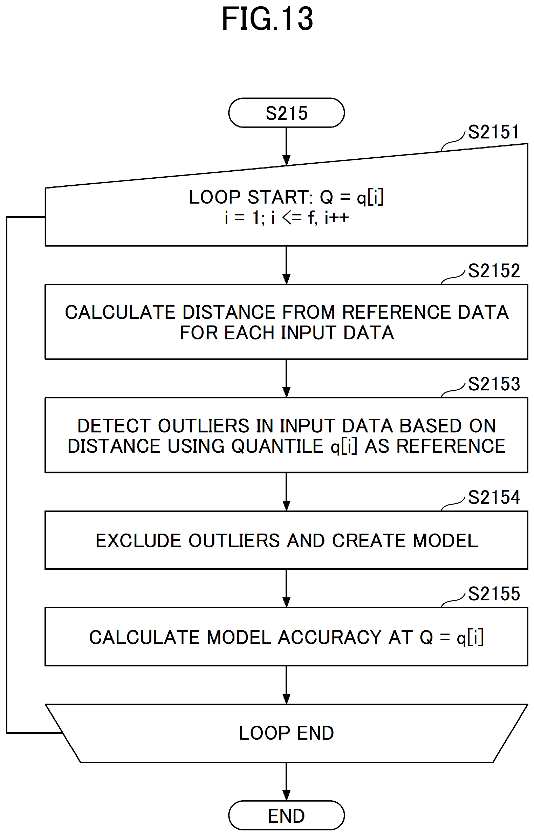

The grid search unit 35 performs the grid search for the optimal quantile using the quantile candidates (S215). Details will be described with reference to FIG. 13.

The model creation unit 39 determines a model with the best accuracy among models that are created using different quantiles (S216). The index of accuracy may be the same as in step S6.

If the local outlier factor method (an example of the second method) is selected, the grid search unit 35 determines candidates for the number of neighbors n[1], n[2], n[3] ...n[f] (S217). The candidates for the number of neighbors n[1], n[2], n[3] ...n[f] are natural numbers such as 1, 2, 3, 4, and 5.

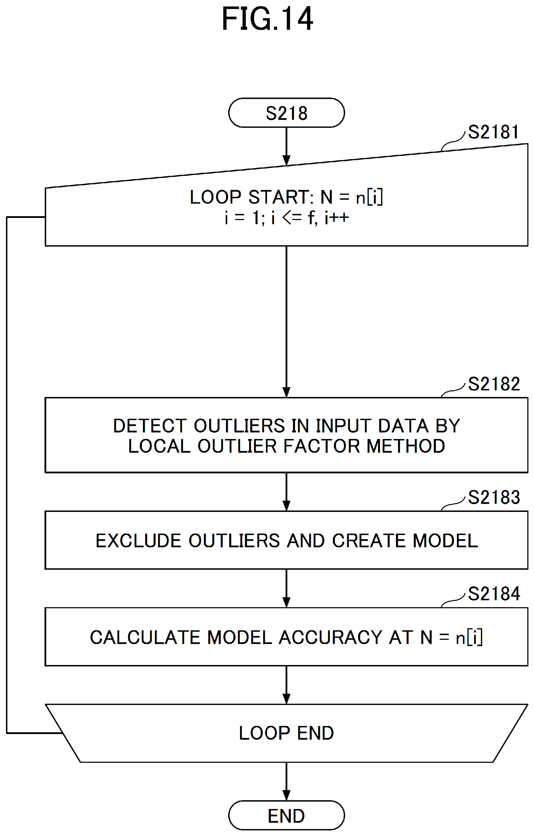

The grid search unit 35 performs the grid search for the optimum number of neighbors using the candidates for the number of neighbors (S218). Details will be described with reference to FIG. 14.

The model creation unit 39 determines the model with the best accuracy among models that are created using different numbers of neighbors (S219). The index of accuracy may be the same as in step S6.

In the process of FIG. 12, the grid search may be performed on only one of the quantiles and the number of neighbors.

FIG. 13 is a flowchart for explaining the process of performing the grid search for the optimal quantile in S215 of FIG. 12.

The grid search unit 35 sets the quantile candidates q[1], q[2], q[3] ...q[f] as quantile Q, and repeats the following process for all candidates (S2151).

The distance calculation unit 34 calculates a distance from the input data as the reference for each input data (S2152). The distance may be a distance that can detect an outlier, such as Euclidean distance or Mahalanobis distance.

The quantile outlier detection unit 36 detects the outlier using the quantile Q based on the distance in step S2152 (S2153).

The exclusion unit 38 excludes learning data having the outlier (input data), and the model creation unit 39 creates a model (S2154).

The accuracy calculation unit 40 calculates the accuracy of the created model (S2155). The index of the accuracy may be the same as in step S6.

As described above, models are created for the quantile candidates q[1], q[2], q[3] ...q[f], and the accuracy of each model is calculated. Since the process returns to step S216 in FIG. 12, the model creation unit 39 determines the model (optimal quantile) with the best accuracy.

FIG. 14 is a flowchart for explaining the grid search process for the optimal number of neighbors in step S218 in FIG. 12.

The grid search unit 35 sets the candidates n[1], n[2], n[3] ...n[f] for the optimal number of neighbors to the number of neighbors N, and repeats the following process for all candidates (S2181).

The local outlier detection unit 37 detects an outlier using the number of neighbors N (S2182).

The exclusion unit 38 excludes learning data having the outlier (input data), and the model creation unit 39 creates a model (S2183).

The accuracy calculation unit 40 calculates the accuracy of the created model (S2184). The index of the accuracy may be the same as in step S6.

As described above, models are created for the candidates n[1], n[2], n[3] ...n[f] for the number of neighbors, and the accuracy of each model is calculated. Since the process returns to step S219 in FIG. 12, the model creation unit 39 determines the model with the best accuracy (the optimal number of neighbors).

Since the optimal model using the optimal quantile or the optimal number of neighbors is created by the process shown in FIG. 13 or FIG. 14, the process proceeds to step S3 in FIG. 9, where cross-validation is performed. Note that the process in step S4 may be the same as the process described in FIG. 11, but it is possible to perform grid search for the output data, as described below.

### <Process Using Grid Search for Input Data and Output Data>

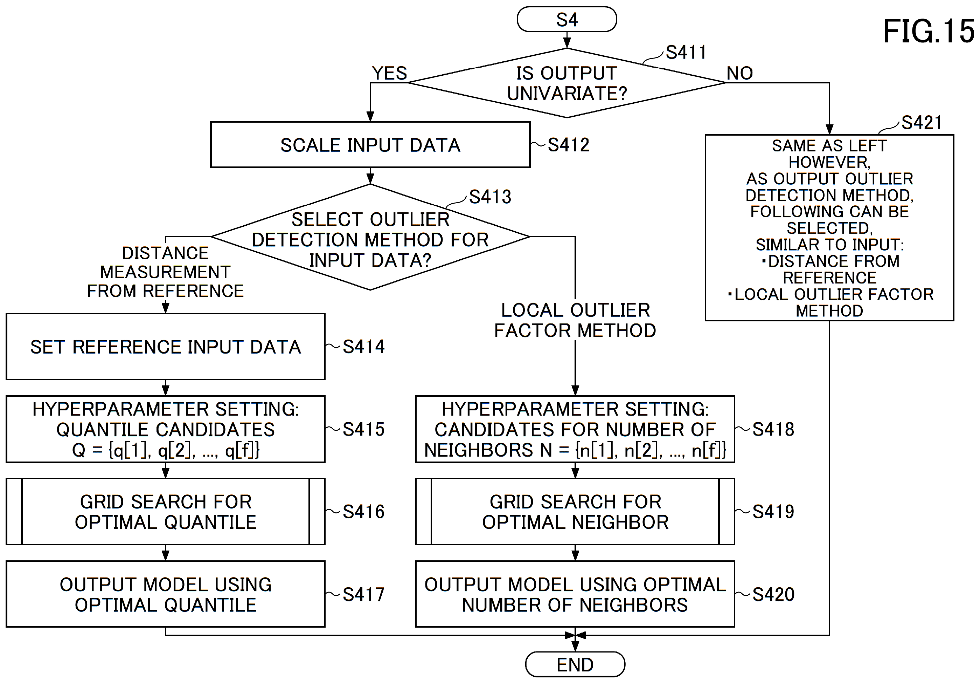

Next, referring to FIGS. 15 to 17, the process of determining the optimal quantile or the optimal number of neighbors for the input data and the output data using the grid search, and of excluding outliers will be described. The overall flow of model creation is similar to that in FIG. 9.

FIG. 15 is a flowchart for explaining the process of creating a model by excluding learning data where both the input data and the output data are outliers in step S4 of FIG. 9.

First, it is determined whether the output data is univariate (S411).

If the output data is univariate (Yes in S411), the input data is converted to a value in a predetermined range such as 0 to 1 by normalization, or to a value having an average of "0" and a variance of "1" by standardization (S412).

Next, the grid search unit 35 selects one of the outlier detection methods (distance measurement from a reference, the local outlier factor method) (S413). The selection method may be set in advance by the developer, or the one method having better accuracy of the model may be performed after performing both methods.

If the distance measurement from the reference (an example of the third method) is selected, the distance calculation unit 34 acquires input data as a reference (S414). The input data as the reference may be set in advance by the developer. Alternatively, input data whose output data (target value) indicates a median value may be automatically selected.

Next, the grid search unit 35 determines quantile candidates q[1], q[2], q[3] ...q[f] (S415). The quantile candidates q[1], q[2], q[3] ...q[f] are natural numbers such as 2, 3, 4, and 5.

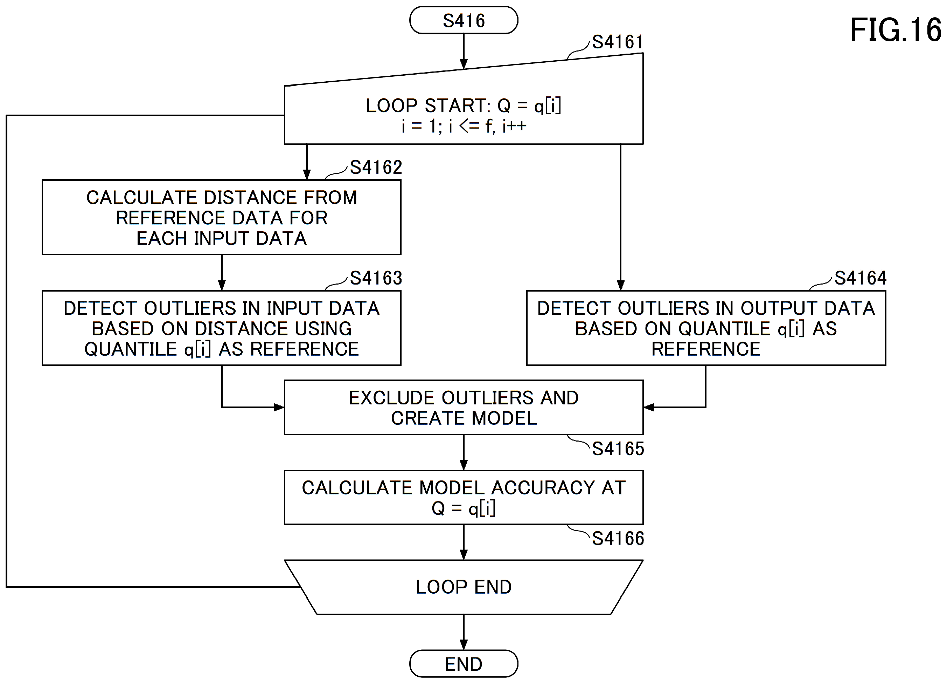

The grid search unit 35 performs the grid search for an optimal quantile, using the quantile candidates (S416). The details will be described with reference to FIG. 16.

The model creation unit 39 determines a model with the best accuracy among models that are created using different quantiles (S417). The index of accuracy may be the same as in step S6.

If the local outlier factor method (an example of the fourth method) is selected, the grid search unit 35 determines candidates for the number of neighbors n[1], n[2], n[3] ...n[f] (S418). The candidates for the number of neighbors n[1], n[2], n[3] ...n[f] are natural numbers such as 1, 2, 3, 4, and 5.

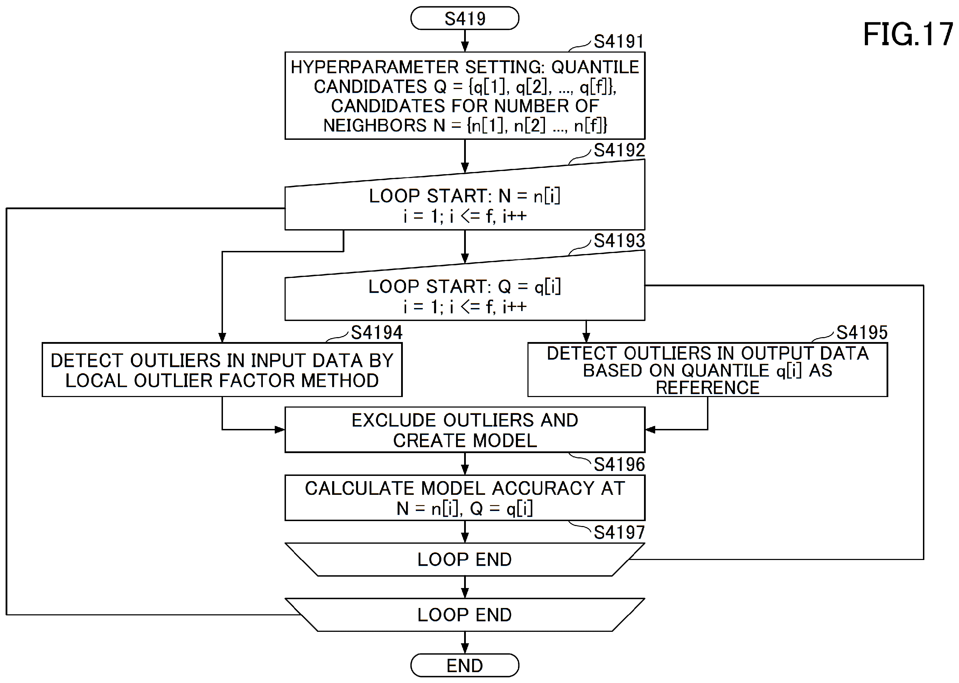

The grid search unit 35 performs the grid search for the optimal number of neighbors, using the candidates of the number of neighbors (S419). The details will be described with reference to FIG. 17.

The model creation unit 39 determines the model with the best accuracy among models that are created using different numbers of neighbors (S420). The index of accuracy may be the same as in step S6.

If it is determined in step S411 that the output data is multivariate (No in S411), the process flow is the same as in a univariate case (S421). However, the distance measurement from the reference and the local outlier factor method can be selected as outlier detection methods for the output data.

In the process of FIG. 15, the grid search may be performed on only one of the quantiles and the number of neighbors.

FIG. 16 is a flowchart illustrating the process of performing the grid search for the optimal quantile in step S416 of FIG. 15.

The grid search unit 35 sets the quantile candidates q[1], q[2], q[3] ...q[f] to quantile Q, and repeats the following process for all candidates (S4161).

The distance calculation unit 34 calculates a distance from the input data as the reference for each input data (S4162). The distance may be a distance capable of detecting an outlier such as Euclidean distance or Mahalanobis distance.

The quantile outlier detection unit 36 detects an outlier using the quantile Q based on the distance in step S4162 (S4163).

Similarly, the quantile outlier detection unit 36 detects an outlier using the quantile Q with respect to the output data (univariate) (S4164).

The exclusion unit 38 excludes learning data where the input data is the outlier and the output data is the outlier, and the model creation unit 39 creates a model (S4165).

The accuracy calculation unit 40 calculates the accuracy of the created model (S4166). The index of the accuracy may be the same as in step S6.

As described above, models are created for the quantile candidates q[1], q[2], q[3] ...q[f], and the accuracy of each model is calculated. Since the process returns to step S417 of FIG. 15, the model creation unit 39 determines the model (optimal quantile) with the best accuracy.

FIG. 17 is a flowchart for explaining the grid search process for the optimal number of neighbors in step S419 of FIG. 15.

The grid search unit 35 sets the quantile candidates q[1], q[2], q[3] ...q[f] to quantile Q, and sets candidates for the number of neighbors n[1], n[2], n[3] ...n[f] to the number of neighbors N (S4191). The grid search unit 35 repeats the following process for all combinations of the quantile candidates and the candidates for the number of neighbors (S4192 and S4193).

The local outlier detection unit 37 detects an outlier in a case of the number of neighbors N for the input data (S4194).

The quantile outlier detection unit 36 detects an outlier in a case of the quantile Q for the output data (S4195).

The exclusion unit 38 excludes learning data where the input data is the outlier and the output data is the outlier, and the model creation unit 39 creates a model (S4196).

The accuracy calculation unit 40 calculates the accuracy of the model that is created in a case of the number of neighbors N and the quantile Q (S4197). The index of the accuracy may be the same as in step S6.

Models are created for all combinations of the candidates for the number of neighbors and the quantile candidates, and the accuracy of each model is calculated. Since the process returns to step S420 in FIG. 15, the model creation unit 39 determines the model with the best accuracy (the optimal quantile and the optimal number of neighbors).

By the process in FIG. 16 or FIG. 17, outliers are excluded based the optimal quantile and the optimal number of neighbors, and an optimal model is created. The process proceeds to step S5 in FIG. 9, where cross-validation is performed.

### <If the output data is multivariate>

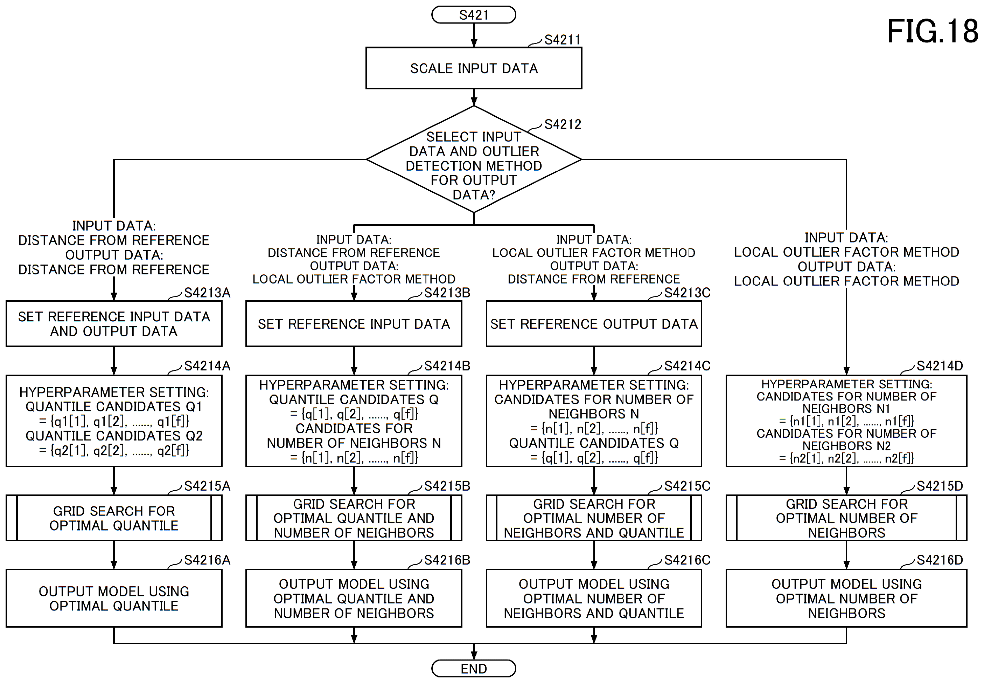

FIG. 18 is a flowchart illustrating the process of creating the model by excluding learning data where both the input data and the output data are outliers in step S421 (output data is multivariate) in FIG. 15. In FIG. 18, differences from steps S412 to S420 in FIG. 15 may be mainly described.

In the process of FIG. 18, in step S4212, the grid search unit 35 selects an outlier detection method (distance measurement from the reference or the local outlier factor method) for each of the input data and the output data (S4212). In this case, the process after step S4212 branches into the following four cases.
A. "Input data: distance from reference (an example of a third method), output data: distance from reference (an example of a sixth method)"
B. "Input Data: distance from reference (an example of a third method), output data: local outlier factor method (an example of a seventh method)"
C. "Input data: local outlier factor method (an example of a fourth method), output data: distance from reference (an example of a sixth method)"
D. "Input data: local outlier factor method (an example of a fourth method), output data: local outlier factor method (an example of a seventh method)"

A. If the "input data: distance from reference, output data: distance from reference" is selected, the distance calculation unit 34 acquires the input data and the output data as references (S4213A).

Next, the grid search unit 35 determines candidate quantiles q1[1], q1[2], q1[3] ...q1[f] on the input data side, and candidate quantiles q2[1], q2[2], q2[3] ...q2[f] on the output data side (S4214A).

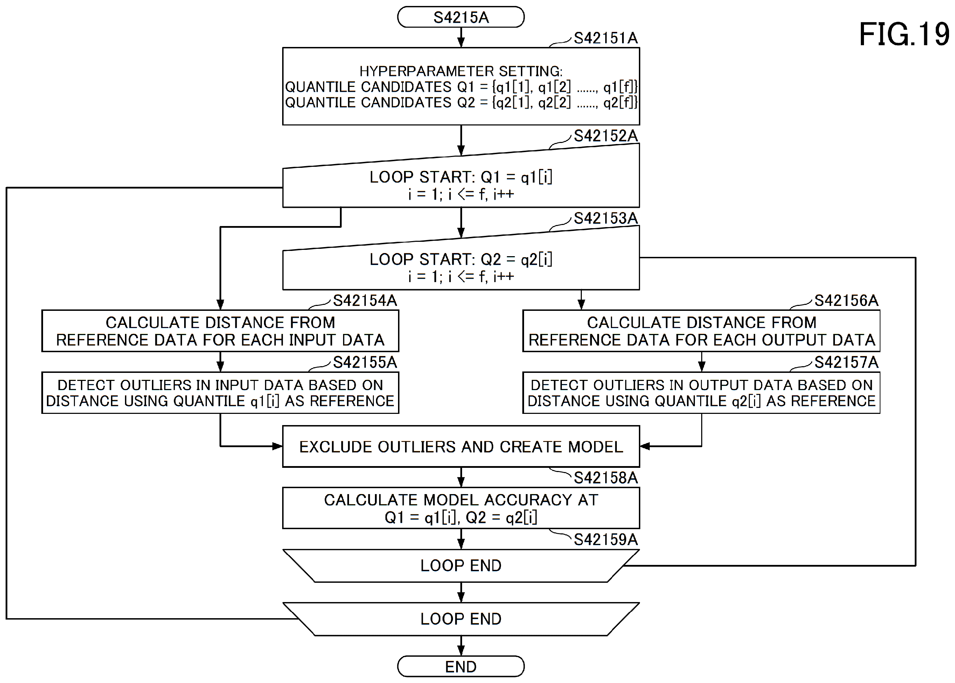

The grid search unit 35 performs the grid search for an optimum combination from all combinations of the candidate quantiles on the input data side and the candidate quantiles on the output data side (S4215A). The details will be described with reference to FIG. 19.

The model creation unit 39 determines a model with the best accuracy among models that are created by excluding learning data having input data that is judged to be outliers based on the quantiles on the input data side; and output data that is judged to be outliers based on the quantiles on the output data side (S4216A). The index of accuracy may be the same as in step S6.

B. If the "input data: distance from reference, output data: local outlier factor method" is selected, the distance calculation unit 34 acquires input data as the reference (S4213B).

Next, the grid search unit 35 determines quantile candidates q[1], q[2], q[3] ... q[f] on the input data side and candidates for the number of neighbors n[1], n[2], n[3] ...n[f] on the output data side (S4214B).

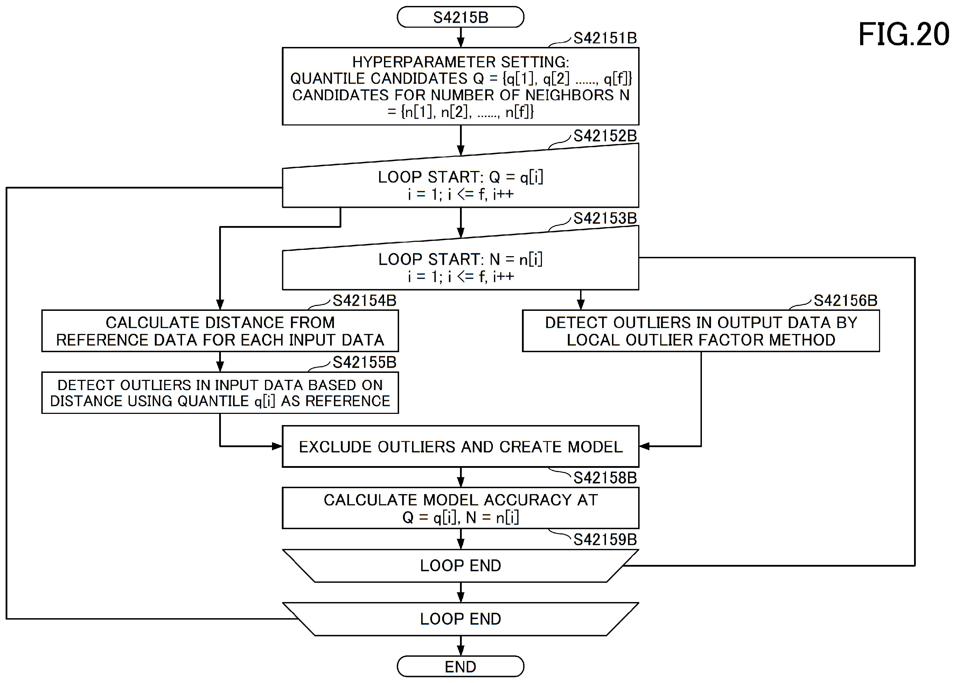

The grid search unit 35 performs grid search for an optimal combination from all combinations of quantile candidates on the input data side and candidates for the number of neighbors on the output data side (S4215B). Details will be described with reference to FIG. 20.

The model creation unit 39 determines a model with the best accuracy among models that are created by excluding learning data having input data that is judged to be outliers based on quantiles on the input data side; and output data that is judged to be outliers based on the number of neighbors on the output data side (S4216B). The index of accuracy may be the same as in step S6.

C. If the "input data: local outlier factor method, output data: distance from reference" is selected, the distance calculation unit 34 acquires output data as the reference (S4213C).

Next, the grid search unit 35 determines candidates for the number of neighbors n[1], n[2], n[3] ...n[f] on the input data side; and quantile candidates q[1], q[2], q[3] ...q[f] on the output data side (S4214C).

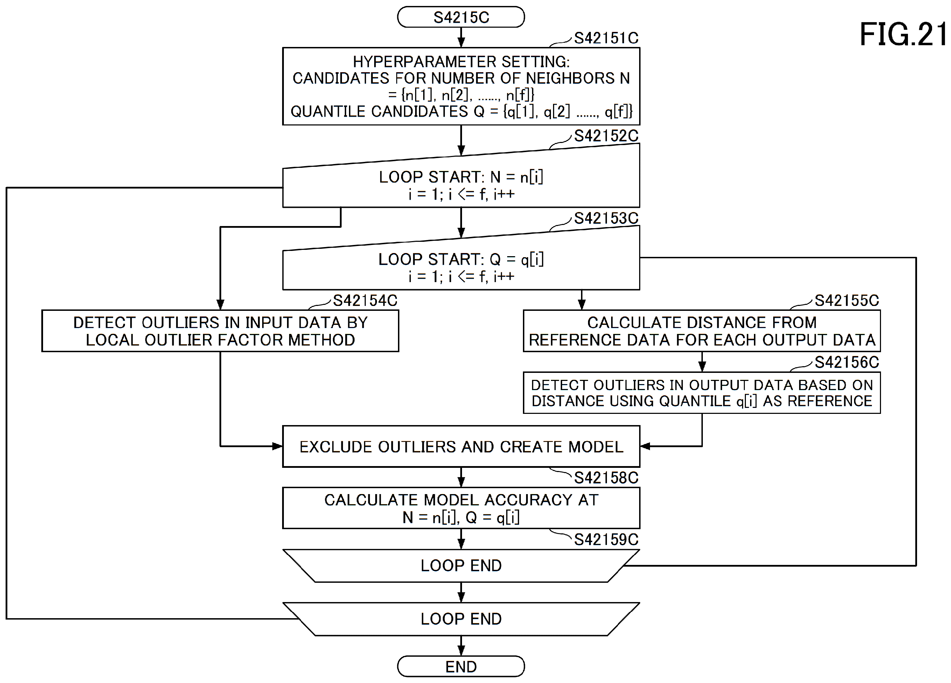

The grid search unit 35 performs grid search for an optimal combination among all combinations of the candidates for the number of neighbors on the input data side; and the quantile candidates on the output data side (S4215C). The details will be described with reference to FIG. 21.

The model creation unit 39 determines a model with the best accuracy among models that are created by excluding learning data having the input data that is determined to be outliers based on the number of neighbors on the input data side; and output data that is determined to be outliers based on the quantiles on the output data side (S4216C). The index of accuracy may be the same as in step S6.

D. If the "input data: local outlier factor method, output data: local outlier factor method" is selected, the grid search unit 35 determines candidates for the number of neighbors n1[1], n1[2], n1[3] ...n1[f] on the input data side; and candidates for the number of neighbors n2[1], n2[2], n2[3] ...n2[f] on the output data side (S4214D).

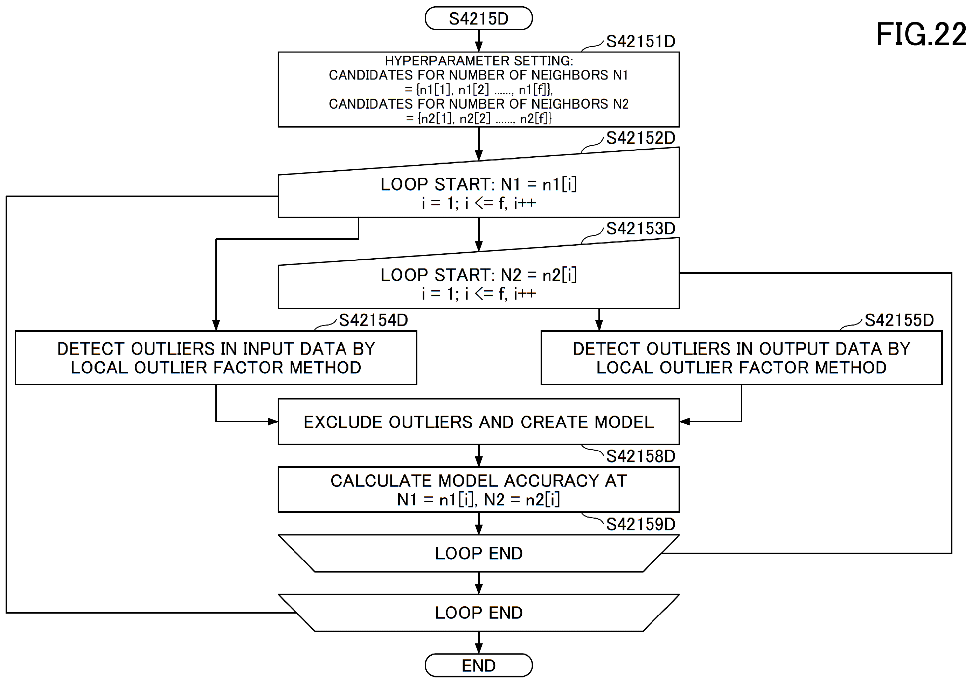

Next, the grid search unit 35 performs grid search for an optimal combination among all combinations of the candidates for the number of neighbors on the input data side and the candidates for the number of neighbors on the output data side (S4215D). Details will be described with reference to FIG. 22.

The model creation unit 39 determines a model with the best accuracy among models that are created by excluding learning data having input data that is determined to be outliers based on the number of neighbors on the input data side; and output data determined to be outliers based on the number of neighbors on the output data side (S4216D). The index of accuracy may be the same as in step S6.

Note that the grid search may not be performed in steps S4215A, S4215B, S4215C, and S4215D in FIG. 18, or the grid search may be performed only in one or more steps.

FIG. 19 is a flowchart illustrating the process for performing grid search for optimal quantiles in the input data and the output data in step S4215A of FIG. 18.

The grid search unit 35 sets quantile candidates q1[1], q1[2], q1[3] ...q1 [f] on the input data side to quantile Q1, and sets quantile candidates q2[1], q2[2], q2[3] ...q2[f] on the output data side to quantile Q2 (S42151A). The grid search unit 35 repeats the following process for all combinations of Q1 and Q2 (S42152A and S42153A).

The distance calculation unit 34 calculates a distance from reference data for each input data (S42154A). The distance may be a distance such as Euclidean distance or Mahalanobis distance that can detect an outlier.

The quantile outlier detection unit 36 detects outlier(s) using the quantile Q1 based on the distance in step S42154A (S42155A).

The same may be applied to steps S42156A and S42157A.

The exclusion unit 38 excludes learning data where the input data is the outlier and the output data is the outlier, and the model creation unit 39 creates a model (S42158A).

The accuracy calculation unit 40 calculates the accuracy of the model created in a case of the quantiles Q1 and Q2 (S42159A). The index of accuracy may be the same as in step S6.

As described above, models are created for all combinations of candidate quantiles on the input data side and candidate quantiles on the output data side, and the accuracy of each model is calculated. Since the process returns to step S4216A in FIG. 18, the model creation unit 39 determines a model with the best accuracy (optimal quantiles for the input data and the output data).

FIG. 20 is a flowchart for explaining the process of performing the grid search for the optimal quantile on the input data side and the optimal number of neighbors on the output data side in step S4215B of FIG. 18.

The grid search unit 35 sets quantile candidates q[1], q[2], q[3] ...q[f] on the input data side to quantile Q, and sets candidates for the number of neighbors n[1], n[2], n[3] ...n[f] on the output data side to the number of neighbors N (S42151B). The grid search unit 35 repeats the following process for all combinations of Q and N (S42152B and S42153B).

The distance calculation unit 34 calculates a distance from a reference data for each input data (S42154B). The distance may be a distance such as Euclidean distance or Mahalanobis distance that can detect an outlier.

The quantile outlier detection unit 36 detects outlier(s) using the quantile Q based on the distance in step S42154B (S42155B).

Similarly, the local outlier detection unit 37 detects the outlier in the output data (multivariate) by the local outlier factor method based on the number of neighbors N (S42156B).

The exclusion unit 38 excludes learning data where the input data is the outlier and the output data is the outlier, and the model creation unit 39 creates a model (S42158B).

The accuracy calculation unit 40 calculates the accuracy of the model that is created in a case of the quantile Q and the number of neighbors N (S42159B). The index of the accuracy may be the same as in step S6.

As described above, models are created for all combinations of the candidate quantiles and the candidates for the number of neighbors, and the accuracy of each model is calculated. Since the process returns to step S4216B in FIG. 18, the model creation unit 39 determines the model with the best accuracy (optimal quantile for input data and optimal number of neighbors for the output data).

FIG. 21 is a flowchart illustrating the process of performing the grid search for the optimal number of neighbors on the input data side; and the optimal quantile on the output data side in step S4215C of FIG. 18.

Next, the grid search unit 35 sets candidates for the number of neighbors n[1], n[2], n[3] ...n[f] on the input data side to the number of neighbors N, and sets quantile candidates q[1], q[2], q[3] ...q[f] on the output data side to quantiles Q (S42151C). The grid search unit 35 repeats the following process for all combinations of N and Q (S42152C and S42153C).

The local outlier detection unit 37 detects the outlier in the input data using the local outlier factor method based on the number of neighbors N (S42154C).

The distance calculation unit 34 calculates a distance from the reference data for each output data (S42155C). The distance may be a distance that can detect an outlier, such as Euclidean distance or Mahalanobis distance.

The quantile outlier detection unit 36 detects an outlier using the quantile Q based on the distance in step S42155C (S42156C).

The exclusion unit 38 excludes learning data where the input data is the outlier and the output data is the outlier, and the model creation unit 39 creates a model (S42158C) .

The accuracy calculation unit 40 calculates the accuracy of the model that is created in a case of the number of neighbors N and the quantile Q (S42159C). The index of the accuracy may be the same as in step S6.

As described above, models are created for all combinations of the candidates for the number of neighbors; and the quantile candidates, and the accuracy of each model is calculated. Since the process returns to step S4216C in FIG. 18, the model creation unit 39 determines the model with the best accuracy (optimal number of neighbors for input data and optimal quantile for output data).

FIG. 22 is a flowchart illustrating the process of performing the grid search for optimal numbers of neighbors for the input data and the output data in step S4215D of FIG. 18.

The grid search unit 35 sets candidates for the number of neighbors n1[1], n1[2], n1[3] ...n1[f] to the number of neighbors N1, and sets candidates for the number of neighbors n2[1], n2[2], n2[3] ...n2[f] to the number of neighbors N2 (S42151D). The grid search unit 35 repeats the following process for all combinations of N1 and N2 (S42152D and S42153D).

The local outlier detection unit 37 detects outliers in the input data by the local outlier factor method based on the number of neighbors N1 (S42154D).

The local outlier detection unit 37 detects the outlier in the output data by the local outlier factor method based on the number of neighbors N2 (S42155D).

The exclusion unit 38 excludes learning data whose input data are outliers and whose output data are outliers, and the model creation unit 39 creates a model (S42158D).

The accuracy calculation unit 40 calculates the accuracy of the model created in a case of the number of neighbors N1 and N2 (S42159D). The index of the accuracy may be the same as in step S6.

As described above, models are created for all combinations of the candidates for the number of neighbors on the input data side and the number of neighbors on the output data side, and the accuracy of each model is calculated. Since the process returns to step S4216D in FIG. 18, the model creation unit 39 determines the model with the best accuracy (the optimal number of neighbors for the input data and the output data).

By any of the processes in FIGS. 19 to 22, outliers are excluded in the optimal quantile or number of neighbors on the input data side, and the optimal quantile or number of neighbors on the output data side, and the optimal model is created. The process proceeds to step S5 in FIG. 9, where cross-validation is performed.

### <Supplementary Information on Combinations of Methods for Excluding Outliers>

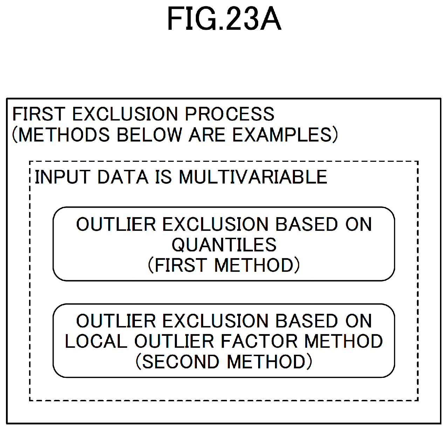

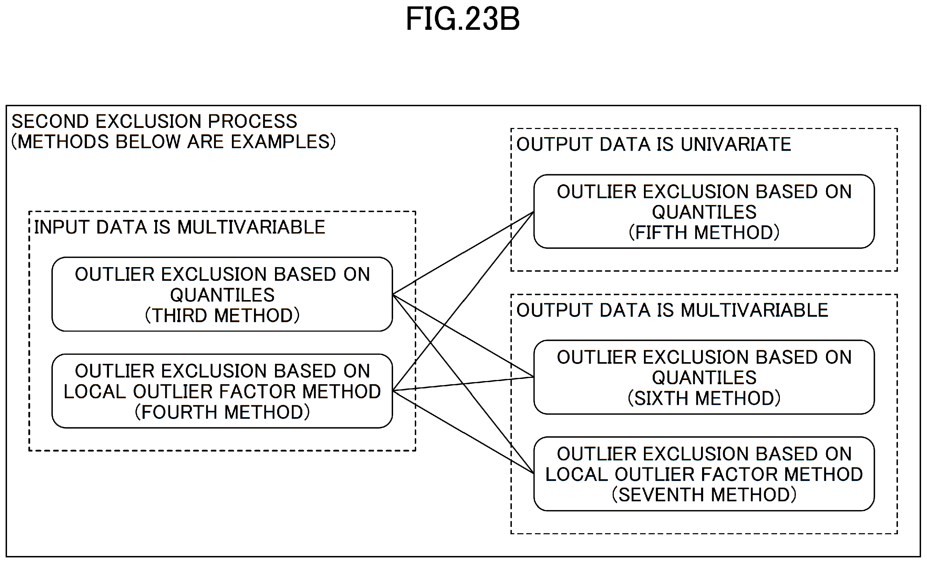

FIGS. 23A and 23B show examples of combinations of various methods in the first exclusion process and the second exclusion process. FIG. 23A shows a method for excluding outliers in input data in the first exclusion process. A plurality of methods for excluding outliers in the input data are prepared, and any one of these methods may be adopted. Note that outlier exclusion by quantiles (first method) and outlier exclusion by the local outlier factor method (second method) are merely examples.

FIG. 23B shows a combination of methods for excluding outliers in the input data and the output data in the second exclusion process. First, a plurality of methods for excluding outliers in the input data are prepared, and any one of these methods may be adopted.

If the output data is univariate, in this embodiment, outlier exclusion by quantiles is shown as an example of the method for excluding the outliers in the output data. Note that the quantile-based outlier exclusion (third method) is merely one example. In this case, it is possible to exclude outliers in the input data and the output data by combining either the third method or the fourth method, with the fifth method. In addition, if the output data is univariate, a plurality of methods for excluding outliers may be prepared.

If the output data is multivariate, in the present embodiment, outlier exclusion by quantiles and outlier exclusion by the local outlier factor method are used as examples of methods for excluding outliers in the output data. Note that outlier exclusion by quantile (sixth method) and outlier exclusion by the local outlier factor method (seventh method) are merely examples. In this case, outliers in the input data and the output data can be excluded by a combination of either the third method or the fourth method with either the sixth method or the seventh method.

### <Main Effect>

· Since the information processing apparatus of this embodiment has a sparse learning data set (explanatory variables), it is easy to exclude outliers even when it is difficult to apply a general outlier detection method. In this case, it is easy to exclude data measured for prototypes or the like.
· Since it is possible to exclude learning data where the target variable and the explanatory variables are outliers, cases or the like where measurement is stopped because characteristics have deteriorated in experimental compositions can be also detected (the explanatory variables becomes outliers because a prototype is used, and the target variable becomes an outlier because poor characteristics are obtained).

- Since the information processor creates a model excluding outliers and validates the accuracy, it is possible to exclude outliers in the explanatory variables if unfavorable prediction accuracy of the model is obtained.
- Since a model is created by excluding learning data where only the explanatory variables are outliers, a model is created by excluding learning data where both the explanatory variables and the target variable are outliers, and a model with higher accuracy is adopted. As a result, it is possible to adopt a model created by excluding outliers from the viewpoint of accuracy.
- Furthermore, since the number of models to be created is not so large, outliers can be detected even when the number of data in the learning data set is large.

### <Other Application Examples>

Although the preferable embodiments for carrying out the present invention have been described above using examples, the present invention is not limited to these examples in any way, and various modifications and substitutions can be made within a range without departing from the gist of the present invention.

For example, in the present embodiment, an example of detecting outliers from a learning data set of a model that is used mainly for composition search has been described, but the learning data set from which outliers are excluded is not limited to such material informatics, and the learning data set may include input data and output data used for machine learning.

Further, exclusion of outliers by quartiles or the local outlier factor method is merely described as an example, and outliers may be detected by standard deviation, Smirnov-Grubbs test, Hotelling theory in a univariate case, or may be detected by standard deviation, cluster analysis, Hotelling T2 method, or the like in a case of multivariate. That is, methods for detecting outliers are not limited to two methods, and any one of a plurality of different methods may be used (preferably at least two or more).

Further, in a case of the client-server method, a user connects the information processing apparatus 30 to the server device 10 and requests creation of a model. In response to the request, the server device 10 may create a model and transmit the model to the information processing apparatus 30. The server device 10 may keep the model in the server device, and in this case, when explanatory variables are transmitted from the information processing apparatus 30, a target variable is returned to the information processing apparatus 30. The information processing apparatus 30 may appropriately execute a Web application provided from the server device 10.

Further, the configuration examples such as FIG. 5 are divided according to main functions in order to facilitate understanding of the process by the information processing apparatus 30 and the server device 10. The present invention is not limited by the method of division or the name of the processing unit. The process of the information processing apparatus 30 and the server device 10 may be divided into more processing units according to the processing contents. Also, one processing unit may be divided such that one processing unit includes more processing units.

Each of functions of the embodiments described above may be realized by one or more processing circuits. Here, the term "processing circuit" as used herein includes a processor programmed to execute each of the functions by software, such as a processor implemented by an electronic circuit, and devices such as an ASIC (Application Specific Integrated Circuit), a DSP (Digital Signal Processor), a FPGA (Field Programmable Gate Array), and conventional circuit modules designed to execute each of the functions described above.

This application claims priority to Japanese Patent Application No. 2023-134755, filed in the Japanese Patent Office on August 22, 2023, and the entire contents of which are incorporated herein by reference.

### REFERENCE SIGNS LIST

- 10: server device
- 30: information processor
- 100: data processing system

## Claims

1. A model creation method executed by an information processing apparatus that creates a model to associate input data included in learning data with output data, the model creation method comprising:
a first exclusion process of excluding the learning data in which the input data is an outlier, from a learning data set;
a second exclusion process of excluding the learning data in which the input data and the output data are outliers, from the learning data set;
a first model creation process of creating a first model using the learning data set from which the learning data is excluded in the first exclusion process;
a second model creation process of creating a second model using the learning data set from which the learning data is excluded in the second exclusion process; and
a model selection process of adopting the model that has better prediction accuracy between the first model and the second model.

2. The model creation method according to claim 1, wherein the first exclusion process includes excluding the outlier in the input data by one of a plurality of different methods.

3. The model creation method according to claim 2, wherein the first exclusion process includes excluding the outlier in the input data by one of at least two different methods that include a first method and a second method.

4. The model creation method according to any one of claims 1 to 3, wherein the second exclusion process includes:
excluding the outlier in the input data by one of a plurality of different methods, and
excluding the outlier in the output data by a predetermined method when the output data is univariate.

5. The model creation method according to claim 4,
wherein the second exclusion process includes:
excluding the outlier in the input data by one of at least two different methods that include a third method and a fourth method, and excluding the outlier in the output data by a fifth method when the output data is univariate, and
wherein the second exclusion process includes:
excluding the outlier in the input data by the third method and excluding the outlier in the output data by the fifth method, or
excluding the outlier in the input data by the fourth method and excluding the outlier in the output data by the fifth method.

6. The model creation method according to any one of claims 1 to 3, wherein the second exclusion process includes:
excluding the outlier in the input data by one of a plurality of different methods, and
excluding the outlier in the output data by one of a plurality of different methods when the output data is multivariate.

7. The model creation method according to claim 6, wherein the second exclusion process includes:
excluding the outlier in the input data by one of at least two different methods that include a third method and a fourth method, and excluding the outlier in the output data by one of at least two different methods that include a sixth method and a seven method when the output data is multivariate, and
wherein the second exclusion process includes:
excluding the outlier in the input data by the third method and excluding the outlier in the output data by the sixth method,
excluding the outlier in the input data by the fourth method and excluding the outlier in the output data by the sixth method,
excluding the outlier in the input data by the third method and excluding the outlier in the output data by the seventh method, or
excluding the outlier in the input data by the fourth method and excluding the outlier in the output data by the seventh method.

8. The model creation method according to claim 3,
wherein the first method is a method of detecting the outlier by a quantile based on a distance of each data from reference data, and
wherein the second method is a method of detecting the outlier by a local outlier factor method.

9. The model creation method according to claim 5,
wherein the third method is a method of detecting the outlier by a quantile based on a distance of each data from reference data,
wherein the fourth method is a method of detecting the outlier by a local outlier factor method, and
wherein the fifth method is a method of detecting the outlier by the quantile.

10. The model creation method according to claim 7,
wherein each of the third method and the sixth method is a method of detecting the outlier by a quantile based on a distance of each data from reference data, and
wherein each of the fourth method and the seventh method is a method of detecting the outlier by a local outlier factor method.

11. The model creation method according to claim 8, wherein the first exclusion process includes:
determining the quantile that is a hyperparameter of the first method, by grid search, or
determining the number of neighbors that is a hyperparameter of the second method, by the grid search.

12. The model creation method according to claim 9, wherein the second exclusion process includes:
determining, by grid search, at least one of the quantile that is a hyperparameter of the third method, or the quantile that is a hyperparameter of the fifth method, or
determining, by the grid search, at least one of the number of neighbors that is a hyperparameter of the fourth method, or the quantile that is a hyperparameter of the fifth method.

13. The model creation method according to claim 10, wherein the second exclusion process includes:
determining, by grid search, at least one of the quantile that is a hyperparameter of the third method, or the quantile that is a hyperparameter of the sixth method,
determining, by the grid search, at least one of the quantile that is a hyperparameter of the third method, or the number of neighbors that is a hyperparameter of the seventh method,
determining, by the grid search, at least one of the number of neighbors that is a hyperparameter of the fourth method, or the quantile that is a hyperparameter of the sixth method, or
determining, by the grid search, at least one of the number of neighbors that is the hyperparameter of the fourth method, or the number of neighbors that is the hyperparameter of the seventh method.

14. A program that causes an information processing apparatus, which creates a model to associate input data included in learning data with output data, to perform:
a first exclusion process of excluding the learning data in which the input data is an outlier, from a learning data set;
a second exclusion process of excluding the learning data in which the input data and the output data are outliers, from the learning data set;
a first model creation process of creating a first model using the learning data set from which the learning data is excluded in the first exclusion process;
a second model creation process of creating a second model using the learning data set from which the learning data is excluded in the second exclusion process; and
a model selection process of adopting the model having better prediction accuracy between the first model and the second model.

15. An information processing apparatus that creates a model to associate input data included in learning data with output data, comprising:
an exclusion unit that excludes the learning data in which input data is an outlier, from a learning data set, and excludes the learning data in which the input data and output data are outliers, from the learning data set;
a model creation unit that creates:
a first model using the learning data set from which the learning data, whose the input data is the outlier, is excluded, and
a second model using the learning data set from which the learning data, whose the input data and the output data are the outliers, are excluded; and
a model selection unit that adopts the method with better prediction accuracy between the first model and the second model.
